(19) Europäisches Patentamt

European Patent Office

Office européen des brevets

(11) **EP 1 475 779 B1**

(12) **EUROPEAN PATENT SPECIFICATION**

(45) Date of publication and mention
of the grant of the patent:
**17.01.2007 Bulletin 2007/03**

(51) Int Cl.:
***G10L 15/18*** *(2006.01)*

(21) Application number: **04010313.7**

(22) Date of filing: **30.04.2004**

(54) **System with composite statistical and rules-based grammar model for speech recognition and natural language understanding**

System mit kombiniertem statistischen und regelbasierten Grammatikmodell zur Spracherkennung und zum Sprachverstehen

Système pour la reconnaissance de la parole et la compréhension de langage naturel utilisant un modèle de grammaire combiné statistique et basé sur des règles

(84) Designated Contracting States:
**AT BE BG CH CY CZ DE DK EE ES FI FR GB GR HU IE IT LI LU MC NL PL PT RO SE SI SK TR**

(30) Priority: **01.05.2003 US 427604**
**20.11.2003 US 718138**

(43) Date of publication of application:
**10.11.2004 Bulletin 2004/46**

(73) Proprietor: **MICROSOFT CORPORATION**
**Redmond, WA 98052 (US)**

(72) Inventors:
• **Wang, Ye-Yi**
**Redmond, Washington 98052 (US)**
• **Acero, Alejandro**
**Bellevue, Washington 98006 (US)**
• **Chelba, Ciprian**
**Seattle, Washington 98112 (US)**

(74) Representative: **Grünecker, Kinkeldey, Stockmair & Schwanhäusser Anwaltssozietät**
**Maximilianstrasse 58**
**80538 München (DE)**

(56) References cited:
**WO-A-01/93246**          **WO-A-01/93249**

• **YE-YI WANG ET AL: "Is word error rate a good indicator for spoken language understanding accuracy" AUTOMATIC SPEECH RECOGNITION AND UNDERSTANDING, 2003. ASRU '03. 2003 IEEE WORKSHOP ON ST. THOMAS, VI, USA NOV. 30-DEC. 3, 2003, PISCATAWAY, NJ, USA,IEEE, 30 November 2003 (2003-11-30), pages 577-582, XP010713222 ISBN: 0-7803-7980-2**
• **YE-YI WANG ET AL: "A unified context-free grammar and n-gram model for spoken language processing" PROCEEDINGS OF THE INTERNATIONAL CONFERENCE ON ACOUSTICS, SPEECH, AND SIGNAL PROCESSING, vol. 3, 5 June 2000 (2000-06-05), pages 1639-1642, XP010507670**
• **RICCARDI G ET AL: "Stochastic automata for language modeling" COMPUTER SPEECH AND LANGUAGE, ACADEMIC PRESS, LONDON, GB, vol. 10, no. 4, October 1996 (1996-10), pages 265-293, XP004418807 ISSN: 0885-2308**
• **HUANG X ET AL: "Spoken language processing" 2001, PRENTICE HALL , UPPER SADDLE RIVER, NEW JERSEY**

**Description**

BACKGROUND OF THE INVENTION

The present invention relates to speech recognition and natural language understanding. More specifically, the present invention relates to using a composite model, formed of a statistical model portion and a rules-based grammar portion, as a language model in performing simultaneous speech recognition and natural language understanding.

Recognizing and understanding spoken human speech is believed to be integral to future computing environments. To date, the tasks of recognizing and understanding spoken speech have been addressed by two different systems. The first is a speech recognition system, and the second is a natural language understanding system.

Conventional speech recognition systems receive a speech signal indicative of a spoken language input. Acoustic features are identified in the speech signal and the speech signal is decoded, using both an acoustic model and a language model, to provide an output indicative of words represented by the input speech signal.

Also, in order to facilitate the development of speech enabled applications and services, semantic-based robust understanding systems are currently under development. Such systems are widely used in conversational, research systems. However, they are not particularly practical for use by conventional developers in implementing a conversational system. To a large extent, such implementations have relied on manual development of domain-specific grammars. This task is time consuming, error prone, and requires a significant amount of expertise in the domain.

In order to advance the development of speech enabled applications and services, an example-based grammar authoring tool has been introduced. The tool is known as SGStudio and is further discussed in Y. Wang and A. Acero, GRAMMAR LEARNING FOR SPOKEN LANGUAGE UNDERSTANDING, IEEE Workshop on Automatic Speech Recognition and Understanding, Madonna D. Campiglio Italy, 2001; and Y. Wang and A. Acero EVALUATION OF SPOKEN LANGUAGE GRAMMAR LEARNING IN ATIS DOMAIN, Proceedings of ICASSP, Orlando, FL 2002. This tool greatly eases grammar development by taking advantage of many different sources of prior information. It also allows a regular developer, with little linguistic knowledge, to build a semantic grammar for spoken language understanding. The system facilitates the semi-automatic generation of relatively high quality semantic grammars, with a small amount of data. Further, the tool not only significantly reduces the effort involved in developing a grammar, but also improves the understanding accuracy across different domains.

However, a purely rules-based grammar in a NLU system can still lack robustness and exhibit brittleness.

In addition, most, if not all, prior approaches treat understanding as a separate problem, independent of speech recognition. A two-pass approach is often adopted, in which a domain-specific n-gram language model is constructed and used for speech recognition in the first pass, and an understanding model obtained with various learning algorithms is applied in the second pass to "understand" the output from the speech recognizer.

Furthermore, from WO 01/93249 is known a uniform language model comprising a context-free grammar specifying semantic or syntactic concepts with non-terminals and an N-gram model having non-terminals imbedded therein. The model includes a combination of an N-gram language model and a plurality of context-free grammars. The N-gram language model is used to predict words and non-terminals. If a non-terminal has been predicted, the plurality of context-free grammars is used to predict terminals as a function of the non-terminal. Furthermore, it is outlined that the described speech recognition system can indicate which context-free grammars are used and provide an indication as to slots present in the spoken phrase. Finally, the N-gram algorithm may use Katz's technique or binomial posterior distribution backoff techniques. In using these techniques, the algorithm estimates the probability that a word will follow a sequence of words.

As explained in the textbook "Spoken Language Processing" by Huang X et al, Prentice

Hall 2001, pages 565-567 and 612-619, Katz's technique involves referring to a separate backoff model for a word hypothesis if the word hypothesis corresponds to a word unseen during training of an N-gram model.

Therefore, it is the object of the invention to provide improved systems and methods for speech processing.

This object is solved by the subject matter of the independent claims, which define the invention.

Preferred embodiments are the subject of the dependent claims.

It is believed that prior systems which treated understanding and speech recognition as two separate, independent tasks, exhibit a number of disadvantages. First, the objective function being optimized when building an n-gram language model for a speech recognizer is the reduction of the test data perplexity, which is related to the reduction of the speech recognition word error rate. This does not necessarily lead to a reduction in overall understanding error rate. Second, a large amount of training data is rarely available for the development of many speech applications. An n-gram trained on a small amount of data often yields poor recognition accuracy.

The present invention thus uses a composite statistical model and rules-based grammar language model to perform both the speech recognition task and the natural language understanding task.

One embodiment of the invention also includes structuring a state machine corresponding to the composite model in a compact manner by processing all unseen words for each n-gram by referring to a shared distribution over a back-off state, rather than including a loop for each unseen word in every n-gram.

BRIEF DESCRIPTION OF THE DRAWINGS

FIG. 1 is a block diagram of one exemplary environment in which the present invention can be used.
FIG. 2A is a block diagram of one example of a model-authoring component.
FIG. 2B illustrates an example schema.
FIG. 2C illustrates an example set of rules generated for the example schema.
FIG. 2D illustrates an example of an annotated sentence.
FIG. 2E illustrates an example parse tree.
FIG. 2F illustrates a table of possible preterminals for words in examples.
FIG. 2G is a table of re-write rules with associated counts and probabilities.
FIG. 3A is a block diagram showing a grammar authoring component in greater detail.
FIG. 3B is a flow diagram illustrating the operation of the grammar-authoring component shown in FIG. 3A.
FIG. 4 illustrates a model-authoring component in accordance with another example.
FIG. 5 shows an example of enumerated segmentations.
FIG. 6 illustrates a statistical model in greater detail in accordance with one embodiment of the present invention.
FIG. 7 is an example of a simplified schema.
FIG. 8 is an example of a set of rules generated from the schema in FIG. 7.
FIG. 9 is an example of an annotated sentence.
FIG. 10 shows generated rules.
FIG. 11 illustrates a state diagram for a composite model.
FIG. 12 shows pseudo code describing a training technique.
FIG. 13 is a block diagram illustrating a runtime system for using a model generated in accordance with the example.
FIG. 14 illustrates an example of a decoder trellis.
FIG. 15 is a simplified block diagram of a speech recognition system.
FIG. 16 illustrates another simplified application schema which is used in the example shown in FIGS. 17A-18B.
FIG 17A illustrates a Hidden Markov Model (HMM) structure corresponding to a top-level grammar generated from the schema shown in FIG. 16.
FIG. 17B illustrates the HMM structure for the "ShowFlight" model from FIG. 17A, in greater detail.
17C illustrates use of the HMM structure shown in FIG. 17B.
FIG. 18A illustrates a finite state representation of a bigram language model with two observed words (a, b).
FIG. 18B illustrates a finite state representation of a model that models a uniform distribution over the back-off state shown in FIG. 18A.
FIG. 18C shows a finite state representation of a bigram language model with two observed words (c, d).

DETAILED DESCRIPTION OF ILLUSTRATIVE EMBODIMENTS

The present invention deals with a speech recognition and natural language understanding system. More specifically, the present invention deals with a composite rules-based grammar and statistical model used to perform both speech recognition and natural language understanding. However, prior to discussing the present invention in greater detail, one exemplary environment in which the present invention can be us will be discussed.

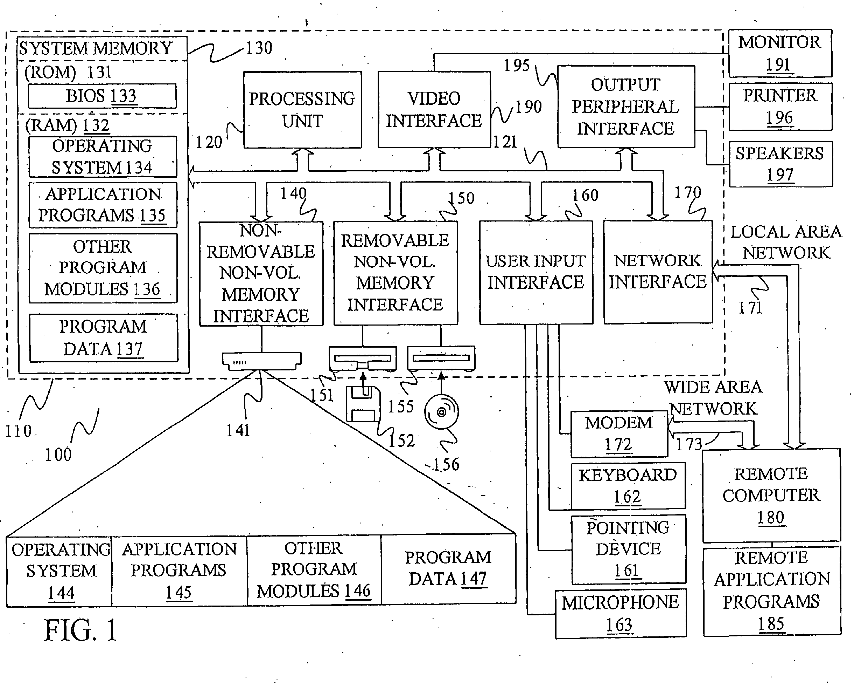

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 100. Communication media typically embodies computer readable instructions, data structures, program modules or other data in a modulated data signal such as a carrier WAV or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, FR, infrared and other wireless media. Combinations of any of the above should also be included within the scope of computer readable media

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way o example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like.' These and other input devices are often connected to the processing unit 120 through a user input interface 160 that is coupled to the system bus, but may be connected by other interface and bus structures, such as a parallel port, game port or a universal serial bus (USE). A monitor 191 or other type of display device is also connected to the system bus 121 via an interface, such as a video interface 190. In addition to the monitor, computers may also include other peripheral output,devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user-input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

It should be noted that the present invention can be carried out on a computer system such as that described with respect to FIG. 1. However, the present invention can be carried out on a server, a computer devoted to message handling, or on a distributed system in which different portions of the present invention are carried out on different parts of the distributed computing system.

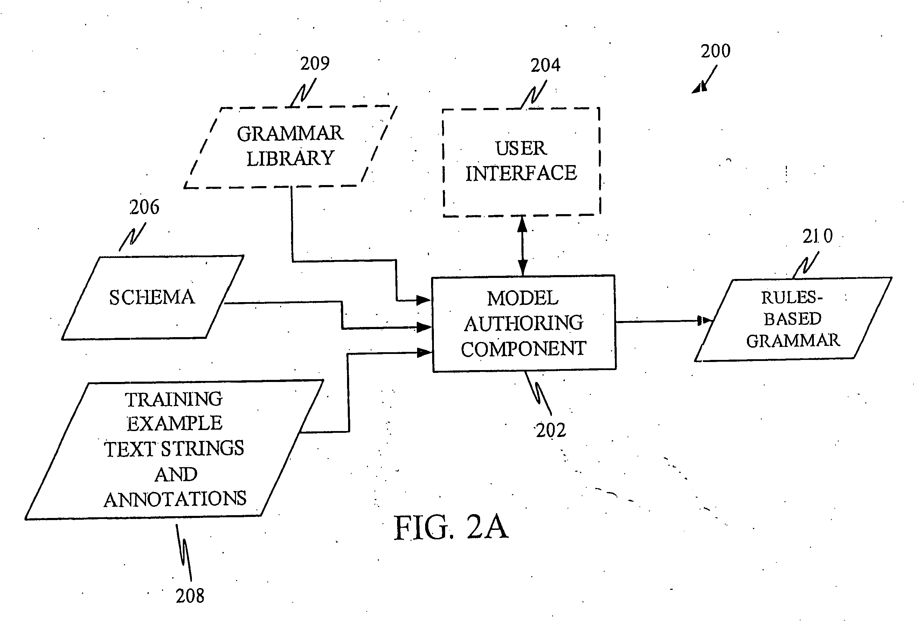

FIG. 2A is a block diagram of a model authoring system 200. Model authoring system 200 includes model authoring component 202 and an optional user interface 204. FIG. 2A also shows that model authoring component 202 receives, as an input, a schema 206, a set of training example text strings 208, an optional grammar library 209, and outputs a rules-based grammar (such as a context free grammar or CFG) 210. The optional grammar library 209 includes definitions for domain-independent concepts such as date and time as well as domain dependent concepts such as city names, airlines, etc. that can be obtained from an application database.

The detailed operation of system 200 is described at greater length below. Briefly, however, a user provides model authoring component 202 with schema 206 and training example text strings 208. This can be done either through optional user interface 204, or through some other user input mechanism, or through automated means. Model authoring component 202 receives the inputs and generates a rules-based grammar 210 based on the inputs. One example of a rules-based grammar is a context free grammar (or CFG) that allows a computer to map an input to a semantic representation of text.

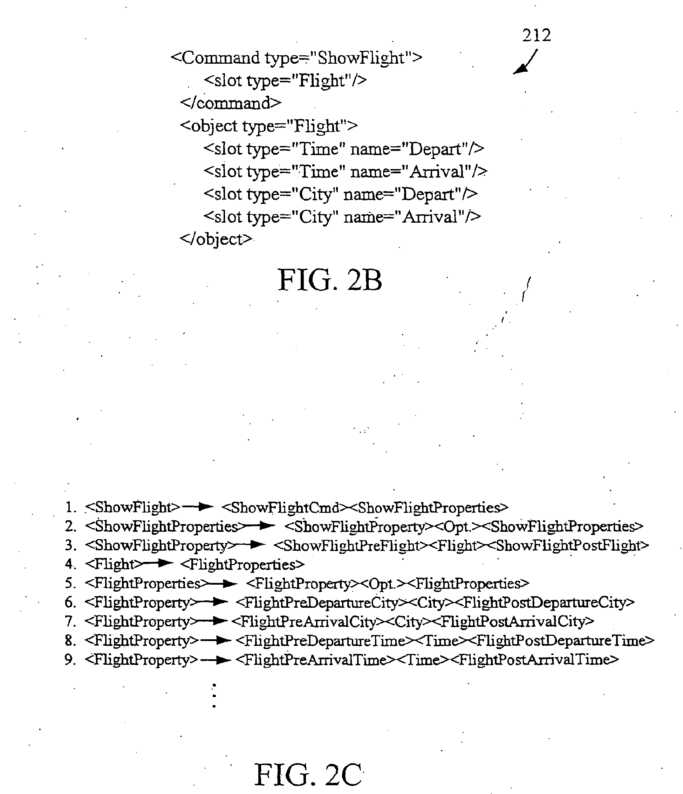

Schema 206 is illustratively a semantic description of the domain being modeled. One illustration of a schema is shown in FIG. 2B. FIG. 2B illustrates a greatly simplified schema 212 that can be input into system 200, by a developer. Schema 212 is a schema that represents the meaning of various text strings for an input from a user to show flights departing from and arriving to different cities and having different departure and arrival times. Schema 212 indicates that the show flight command (ShowFlight) includes a semantic class for Flight as a slot. Schema 212 also illustrates the semantic class for Flight in greater detail indicating that it has four slots that correspond to a departure time, an arrival time, a departure city and an arrival city.

From schema 212, model authoring component 202 can generate a set of rules illustrated in FIG 2C. Rule one shows that a ShowFlight sentence will always have a command portion ShowFlightCmd which will be followed by a properties portion ShowFlightProperties.

Rule two indicates that the ShowFlightProperties portion can have one or more properties in it. For example, rule two indicates that the ShowFlightProperties portion includes at least one ShowFlightProperty which can be followed by an optional ShowFlightProperties portion. This recursive definition of ShowFlightProperties simplifies its expression and allows it to have one or more properties.

Rule three shows that the ShowFlightProperty portion includes a ShowFlightPreFlight portion, a Flight portion, and a ShowFlightPostFlight portion. This indicates that the slot Flight in the schema can have both a preamble and a postamble.

The fourth rule indicates that the object Flight in the schema does not have a command portion, but only has a properties portion (FlightProperties), because Flight is an object in the schema while ShowFlight is a command. Rule five shows that the FlightProperties portion is again recursively defined to include at least one FlightProperty followed by an optional FlightProperties.

Rules six-nine correspond' to the four slots in schema 212 shown in FIG. 2B. Rule six defines the first property as having a departure city slot that is preceded by a preamble (FlightPreDepartureCity) and is followed by a postamble (FlightPostDepartureCity). Rule seven defines the arrival city in the same way, and rules eight and nine define the departure time and arrival time in a similar fashion, respectively.

Even given the fact that all of the rules identified in FIG. 2C can be automatically generated from schema 212 by model authoring component 202, there are still no rewrite rules that indicate what specific words are actually mapped to the specific pre-terminals (command for a command semantic class, as well as preambles and postambles for slots.)

For example, there is no rule which would indicate that the phrase "please show me the flights..." is mapped to the ShowFlightCmd. Similarly, there is no rewrite rule which indicates which words would specifically map to, for example, the FlightPreArrivalCity preamble, etc. Therefore, the developer also inputs training example text strings and annotations 208 such that model authoring component 202 can learn these rewrite rules as well.

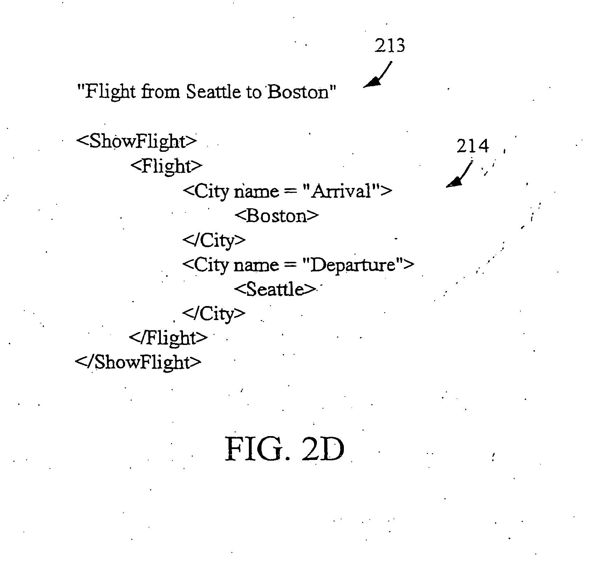

FIG. 2D illustrates one example of an example text string 213 "Flight from Seattle to Boston" along with a semantic annotation 214 that corresponds to text string 213. Semantic annotation 214 is provided by the developer and indicates the semantic meaning of string 213. Semantic annotation 214, for example, shows that the input text string 213 corresponds to a ShowFlight command that has a slot Flight which itself has two slots, both of which are cities. The distinction between the'two slots in the Flight slot is made only by the name of the slot. One is referred to as the "Arrival" city and the other is referred to as the "Departure" city. Semantic annotation 214 also maps the word "Boston" to the "Arrival" city slot and the word "Seattle" to the "Departure" city slot. Therefore, based on the annotation 214, model authoring component 202 will know which slots map to the words "Seattle" and "Boston".

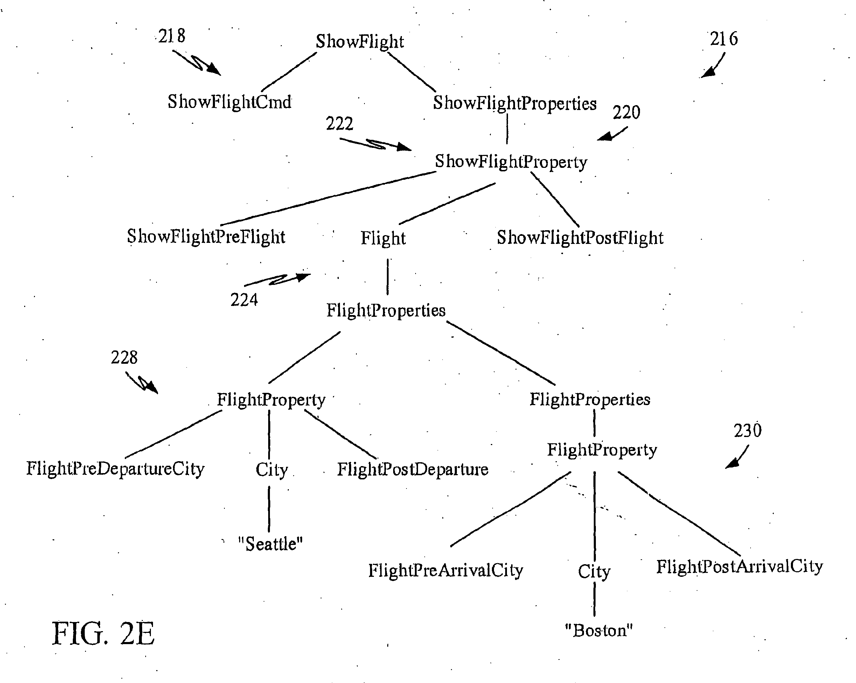

From the annotated example and the template grammar rules shown in FIG. 2C, model authoring component 202 can generate a rules-based grammar (or CFG) parse tree, such as parse tree 216 illustrated in FIG. 2E. The first level 218 of parse tree 216 (the portion that shows that ShowFlight is formed of ShowFlightCmd followed by ShowFlight-Properties) is formed from rule 1 in FIG. 2C.

The second level 220 (the portion indicating that ShowFlightProperties is formed of ShowFlightProperty) is generated from rule 2 where the optional ShowFlightProperties protion is not used.

The next level 222 (the portion indicating that ShowFlightProperty is formed of ShowFlightPreFlight followed by Flight followed by ShowFlightPostFlight) is generated from rule 3 in FIG. 2C.

The next level 224 (indicating that the Flight object is formed of a FlightProperties section) is generated from rule 4 in FIG. 2C.

The next level 226 (the portion indicating that the FlightProperties portion is formed of a FlightProperty portion followed by a FlightProperties portion) is generated from rule 5 in FIG. 2C.

The next level 228 (the level indicating that the FlightProperty portion is formed of a FlightPreDepartureCity portion followed by a City slot followed by a FlightPostDepartureCity postamble) is generated from rule 6, and the next level 230 (the level showing that FlightProperties is formed of a FlightPreArrivalCity preamble, a City slot and a Flight-PostArrivalCity postamble) is generated from rule 7.

Finally, the level indicating that the word "Seattle" is mapped to the City slot under level 228 and that the word "Boston" is mapped to the City slot under level 230 are generated from the semantic annotation 214 which is also input by the user. Thus, model authoring component 202 can learn how to map from the words "Seattle" and "Boston" in the input sentence into the CFG parse tree and into the rules generated in FIG. 2C. It should be noted that city rules can also be obtained from a library grammar (which in turn can be constructed by taking the data from the domain-specific database) instead of annotated data.

However, there are still a number of words in the input sentence which are not yet mapped to the tree. Those words include "Flight", "from", and "to". Since the words "Flight" and "from" precede the word "Seattle", they can map to a variety of preterminals in parse tree 216, including FlightCmd, ShowFlightPreFlight, and FlightPreDepartureCity. Similarly, since the word "to" resides between the words "Seattle" and "Boston" in input text string 213, the word "to" can map to either FlighPostDepatureCity or FlightPreArrivalCity.

Since it is known that the word "to" is a preposition, it must modify what comes after it. Therefore, it can be determined that the word "to" maps to the FlightPreArrivalCity perterminal in parse tree 216.

However, it is still unknown where the words "Flight" and "from" should reside in parse tree 216. Also, the particular segmentation for the two words is unknown. For example, in one alternative, the word "Flight" can be mapped to ShowFlightCmd while the word "from" is mapped to ShowFlightPreFlight. In that case, the preterminal FlightPreDepatureCity is mapped to an empty set.

In accordance with another alternative, both words "Flight" and "from" are mapped to ShowFlightCmd" while the other preterminals ShowFlightPreFlight and FlightPreDepartureCity are both mapped to empty sets.

In still another alternative, "Flight" is mapped to ShowFlightCmd and "from" is mapped to FlightPreDepartureCity, while the remaining preterminal ShowFlightPreFlight is mapped to an empty set.

This represents a segmentation ambiguity which historically has not been resolved in the absence of additional information from the developer. In some prior systems, each of the possible segmentations was simply displayed to the user, and the user was allowed to choose one of those segmentations.

However, this has resulted in a number of problems. First, this type of interaction with the user is intrusive and time consuming. Also, when there are more possible preterminals, and more unaligned words in the input text string, the number of possibilities which must be presented to the user rises dramatically. It is very difficult, if not impossible, to effectively display all such candidate segmentations for selection by the user. In addition, even when the segmentations were adequately displayed for selection by the user, user's often make errors in the segmentation or segment similar text strings inconsistently.

In accordance with one embodiment the expectation maximization (EM) algorithm is applied to segmentation ambiguities in model component 202 in order to disambiguate the segmentation choices. The EM algorithm, in general, is an algorithm for estimating model parameters with maximum likelihood estimator when the model contains unobservable hidden variables.

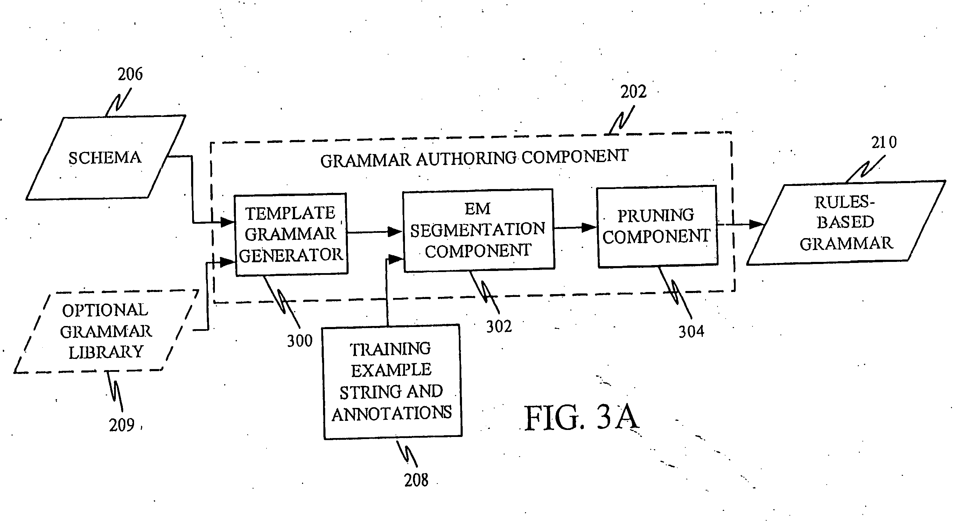

FIG. 3A shows a block diagram illustrating model authoring component 202 in greater detail. FIG. 3A shows that model authoring component 202 illustratively includes template grammar generator 300, segmentation EM application component 302 and pruning component 304. Template grammar generator 300 receives schema 206' and any rules in optional grammar library 209 referred to (through proper type unification) by semantic classes in schema 206 and generates a template grammar which includes all rules that can be learned or gleaned from schema 206 and optional grammar library 209. The template grammar is then taken by the EM segmentation component as an input, together with the training examples (text strings and their annotations.) The EM segmentation component 302 uses the template grammar to find the segmentation ambiguities in the training examples. Component 302 then operates to disambiguate any segmentation ambiguities. Based on that disambiguation, rewrite rules can be pruned from the grammar using pruning component 304 to provide the rules-based grammar 210.

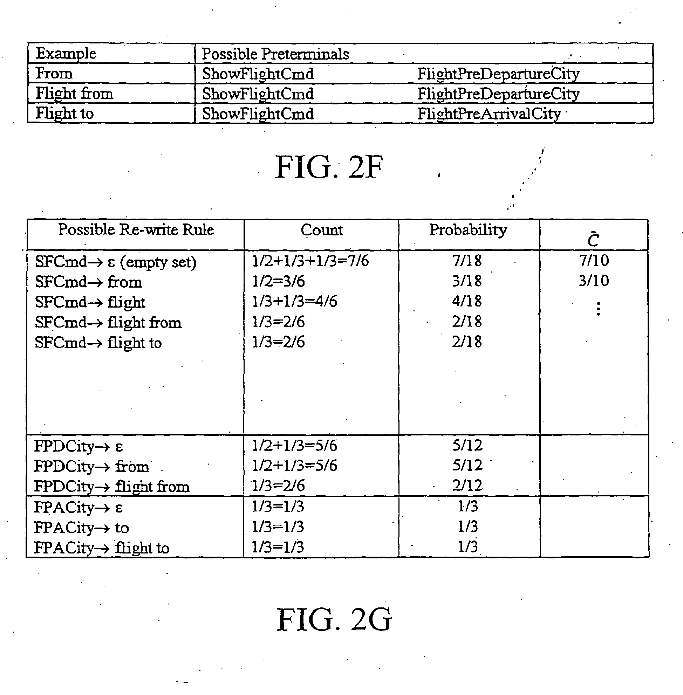

To further illustrate the operation of EM segmentation component 302, FIGS. 2F and 2G provide exemplary tables. FIG. 2F shows a table that includes a set of examples. The first of which shows that the word "from" can possibly map to either the preterminal ShowFlightCmd or the perterminal FlightPreDepatureCity. The example may be harvested by component 302 from an example sentence like "from Seattle to Boston". The second example indicates that the words "Flight from" can be mapped to preterminals "ShowFlightCmdand FlightPreDepatureCity. The example may be harvested by component 302 from an example sentence like "Flight from Seattle to Boston". The third example illustrates that the words "Flight to" can be mapped to the preterminals ShowFlightCmd and FlightPreArrivalCity, which can be similarly obtained by component 302 from an example like "Flight to Boston.on Tuesday". However, the segmentation of the examples,is ambiguous. In other words, it is not yet known whether the word "from" in the first example is to be mapped to the preterminal ShowFlightCmd or to the preterminal FlightPreDepatureCity. Similarly, it is not known how the words "Flight from" are to be mapped between the preterminals ShowFlightCmd and FlightPreDepatureCity. Additionally, of course, it is not known how the words "Flight to" are to be mapped between the possible preterminals ShowFlightCmd and FlightPreArrivalCity.

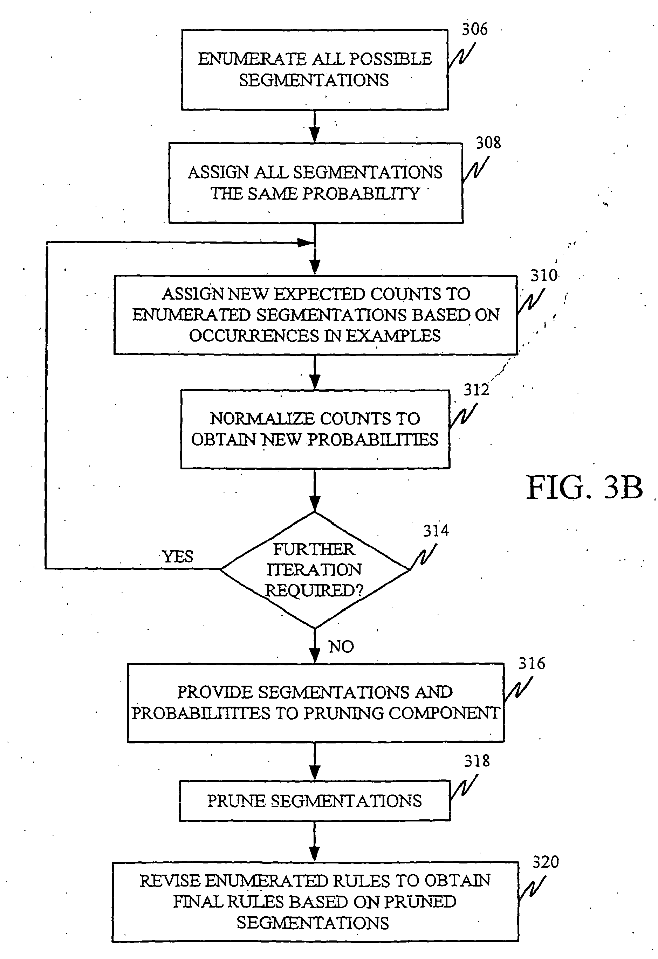

FIG. 2G is a table further illustrating the operation of the EM algorithm application component 203. FIG. 3B is a flow diagram illustrating the operation of component 203 and will be described along with FIGS. 2F and 2G.

First, component 302 enumerates all possible segmentations. This is shown in the left column of FIG. 2G labeled possible re-write rules. In the re-write rules shown in FIG. 2G, some of the words that form the preterminal names are abbreviated. Therefore, by way of example, the rewrite rule SFCmd $\rightarrow \epsilon$ indicates the segmentation in which the ShowFlightCmd (abbreviated SFCmd) preterminal is mapped to an empty set. Similarly, the rewrite rules SFCmd$\rightarrow$ from represents the segmentation in which the word "from" is mapped to the preterminal ShowFlightCmd. Further, FPDCity$\rightarrow \epsilon$ represents the segmentation in which the preterminal FlightPreDepartureCity (abbreviated FPDCity) is mapped to the empty set, and FPACity$\rightarrow \epsilon$ represents the segmentation in which the preterminal FlightPreArrivalCity (abbreviated FPACity) is mapped to the empty set. From these examples, the other notation in the re-write rule portion of the table shown in FIG. 2G is self explanatory. Suffice it to say that each possible segmentation for the examples shown in FIG. 2F is enumerated.

From the first example in FIG. 2F, one segmentation indicates that the word "from" is mapped to ShowFlightCmd and another segmentation indicates that the word "from" is mapped to Flight PreDepature City.

The second example in FIG. 2F supports a number of different segmentation alternatives as well. For example, in accordance with one segmentation alternative, the words "Flight from" are both mapped to the perterminal ShowFlightCmd and the preterminal FlightPreDepatureCity is mapped to $\epsilon$. In another segmentation alternative, the words "Flight from" are both mapped to the preterminal FlightPreDepatureCity and the preterminal "ShowFlightCmd" is mapped to $\epsilon$. In yet another alternative, the words "Flight" and "from" are split such that the word "Flight" is mapped to the preterminal ShowFlightCmd and the word "from" is mapped to the preterminal FlightPreDepartureCity. Each of these segmentations is also shown in the rewrite rules enumerated in FIG. 2G

The third example can be segmented in a similar way to the second example in that the words "Flight to" can be mapped to either the preterminal ShowFlightCmd or the preterminal FlightPreArrivalCity while the other preterminal is mapped to $\epsilon$, or the words "Flight to" can be split between the preterminals ShowFlightCmd and FlightPreArrivalCity. Again, each of these segmentations is represented in the rewrite rules shown in FIG. 2G.

Enumeration of all possible segmentations is indicated by block 306 in the flow diagram of FIG. 3B.

Once the rewrite rules that support the segmentations are enumerated, they are each assigned a probability. Initially, all segmentations illustrated in FIG. 2G are assigned the same probability. This is indicated by block 308 in FIG. 3B

Next, component 302 assigns new expected counts to the enumerated rewrite rules, based upon the possible occurrences of those counts in the examples shown in FIG. 2F. This is indicated by block 310. For instance, from the first example, there are two possible segmentations, one which maps the word "from" to ShowFlightCmd and maps the preterminal FlightPreDepartureCity to ε, and the other of which maps ShowFlightCmd to ε and maps the word "from" to the preterminal FlightPreDepartureCity. The first rewrite rule says that the ShowFlightCmd preterminal maps to ε (the empty set). Therefore, half of the segmentations in example 1 support the first rewrite rule shown in the table of FIG. 2G. Thus, from the first example, the first rewrite rule (ShowFlightCmd→ ε) is assigned a count of one half.

As discussed above, the second example supports three different segmentations, one of which assigns both words "Flight from" to the preterminal ShowFlightCmd and the preterminal FlightPreDepartureCity to ε, another of which maps the word "Flight" to the preterminal ShowFlightCmd and the word "from" to the preterminal FlightPreDepartureCity, and the last of which maps the preterminal ShowFlightCmd to ε and both words "Flight from" to the preterminal Flight-PreDepartureCity. Of those three segmentations, one supports the first rewrite rule (SFCmd→ ε). Therefore, from the second example, the first rewrite rule is assigned a count of one third.

In the same way, the third example has three possible segmentations, one of which maps the preterminal ShowFlightCmd to ε. Therefore, from the third example, the first rewrite rule shown in FIG. 2G is again assigned a count of one third.

Using this type of analysis, it can be seen that the second rewrite rule (SFCmd→ from) is only supported by the first example. Therefore, since there are two possible segmentations for the first example,and one of them supports the second rewrite rule, the second rewrite rule (SFCmd → from) is assigned a count of one half.

The third rewrite rule (SFCmd→ Flight) is supported by one of the segmentations from each of the second and third examples shown in FIG. 2F. Therefore, since each of those examples has three possible segmentations, the third rewrite rule (SFCmd→ Flight) is assigned a count of one third from each example.

Component 302 assigns counts to each of the enumerated rewrite rules in FIG. 2G in this way, and those counts are illustrated in the second column of the table shown in FIG. 2G. The counts are all converted such that they have a common denominator, and they are then normalized for each preterminal to get the probability. In other words, the total probability mass for the ShowFlightCmd terminal must add to one. Therefore, the counts for each rewrite rule are multiplied by a normalization factor in order to obtain a probability associated with that rewrite rule.

For example, it can be seen that the total number of counts for the preterminal ShowFlightCmd is 3. Therefore, the probability of the first rewrite rule (SFCmd → ε) is 7/18. Similarly, the probability for the second rewrite rule (SFCmd→ from) is 3/18, etc. Component 302 processes the counts for each rewrite rule, and each preterminal, in order to obtain this probability.

It can thus be seen that, for the preterminal FPDCity, the sum of the counts over all different rules is 2, therefore the normalization factor is 1/2. For the final preterminal FPACity, there is only one count (3*1/3=1), and therefore the normalization factor is one. It can thus be seen that component 302 resets the probability associated with each rewrite rule to one which more accurately reflects the occurrences of the rewrite rule supported by the examples. Normalizing the counts to obtain the new probability is indicated by block 312 in FIG. 3B.

Component 302 iterates on this process (re-estimating the counts and obtaining new probabilities) until the counts and probabilities converge. This is indicated by block 314. For instance, in order to obtain a new count $\bar{C}$ for the first rewrite rule, component 302 implements equation 1 that first find the total likelihood of observing the word "from" given the non-terminal sequence ShowFlightCmd and FPDCity as follows:

$$\text{Eq. 1} \quad P(from|ShowFlightCmd\ FPDCity)$$
$$=P(\varepsilon|ShowFlightCmd)*P(from|FPDCity)$$
$$+P(from|ShowFlightCmd)*P(\varepsilon|FPDCity)$$
$$=[(7/18) \times (5/12)] + [(3/18) \times (5/12)] = 50/216$$

Out of this amount, the proportion for the segmentation that aligns the empty string to ShowFlightCmd and "from" to FPDCity becomes the new expected count $\bar{C}$:

$$\bar{C}(\varepsilon\,|\,cmd) = \frac{P(\varepsilon\,|\,cmd)*P(from\,|\,FPDCity)}{P(from\,|\,cmd\ FPDCity)}$$

$$\text{Eq. 2} \qquad = \frac{\dfrac{7}{18} x \dfrac{5}{12}}{\dfrac{50}{216}} = \frac{\dfrac{35}{216}}{\dfrac{50}{216}} = \frac{35}{50} = \frac{7}{10}$$

Similarly, the new count $\bar{C}$ for the second rewrite rule (SFCmd→ from) is computed as follows:

$$\text{Eq. 3} \qquad \bar{C}(from \mid cmd) = \frac{P(from \mid cmd) * P(\varepsilon \mid FPDCity)}{P(from \mid cmd\ FDPCity)} = \frac{\dfrac{3}{18} x \dfrac{5}{12}}{\dfrac{50}{216}} = \frac{\dfrac{15}{216}}{\dfrac{50}{216}} = \frac{3}{10}$$

This process is continued for each of the rewrite rules to collect the counts $\bar{C}$ from each example. Then, the new counts are multiplied by the normalization factor to obtain the new probabilities. As shown in FIG. 3B, component 302 iterates on this process, re-estimating the new counts and the new probabilities until the probabilities converge.

Once the iteration is complete, component 302 will have computed a new count and new probability associated with each of the enumerated rewrite rules. While this, in and of itself, is very helpful, because it has assigned a probability to each of the segmentations to the rules corresponding to the different segmentations obtained during training, it may not be a desired final result. For example, some parsers are unable to take advantage of probabilities. Also, in some parsing components, a large number of rules render the parser less effective.

Thus, component 302 provides the rules and associated probabilities to pruning component 304 where the rules can be pruned. This is indicated by blocks 316 and 318 in FIG. 3B. Pruning component 304 can prune the rules (as indicated by block 320) in one of a number of different ways. For example, pruning component 304 can simply prune out rules that have a probability below a desired threshold level. Component 304 then introduces the remaining rules into the rules-based grammar 210.

In accordance with another illustrative example, pruning component 304 eliminates all but a predetermined number of segmentations with high likelihood corresponding to each example, and only introduce rewrite rules to the grammar according to the remaining segmentations. For instances, component 304 may eliminate all the segmentations corresponding to each example but the one that has the highest probability. Thus, for example 1, assume that the segmentation that mapped the word "from" to the preterminal FlightPreDepartureCity had a higher probability than the segmentation which assigned the word "from" to the preterminal ShowFlightCmd. In that instance, the second segmentation (the one which mapped "from" to ShowFlightCmd) is eliminated. In that case, the two rewrite rules that support the chosen segmentation are added to the grammar. Therefore, the rewrite rule "SFCmd → ε" and the rewrite rule "FPDCity → from" are both added to the grammar.

Similarly, rules which are no longer supported by the best segmentation of any examples can be removed from the enumerated rules shown in FIG. 2G. Thus, the rule "SFCmd → from" can be removed, since it was only supported by the segmentation for example 1 that has been eliminated.

Application of the EM algorithm in this way is now described in more formal mathematical terms. Segmentation ambiguity resolution can be formalized as the problem of finding an m block partition $\pi = \alpha_1, \alpha_2, ..., \alpha_m$ for the word sequence $w = w_1, w_2, .., w_n$, such that each block aligns to a pre-terminal in the sequence $N = NT_1, NT_2, ..., NT_m$. A block may contain 0 or more words from w.

If we model the joint probability of π, N and w with

$$\text{Eq. 4} \qquad P(\pi, N, w) = \prod_{i=1}^{m} P(NT_1 \rightarrow \alpha_i)$$

Then given N and w, the most likely segmentation can be obtained as:

Eq. 5

$$\hat{\pi} = \arg\max_{\pi} P(\pi, N, w) = \arg\max_{\pi = \alpha_1, \dots, \alpha_m} \prod_{i=1}^{m} p(NT_1 \to \alpha_i)$$

Such a partition can be found with Viterbi search. Thus the only problem left is to estimate the model parameter $P(NT \to \alpha)$ for every pre-terminal (or concept) NT and word sequence $\alpha$. This could be done with maximum likelihood (ML) estimation if the training data is a list of pre-terminals paired with a word sequence for each pre-terminal. However, the training examples obtained form the user via the authoring tool are illustratively pairs of pre-terminal sequences and terminal sequences. The partition or segmentation is a hidden variable and unknown to the tool.

The EM algorithm initially sets the parameters $P_\phi$ for the model, and then iteratively modifies the parameters to $P_{\phi'}$, such that the likelihood of the observation D increases.

To find such $P_{\phi'}$, we define the auxiliary function Q in (6):

Eq. 6

$$Q(P_{\phi'} \mid P_\phi) = \sum_{N, w} c(N, w) \sum_{\pi} P_\phi(\pi \mid N, w) \log \frac{P_{\phi'}(\pi, N, w)}{P_\phi(\pi, N, w)}$$

It is a lower bound of $L(D \mid P_{\phi'})$ -$L(D \mid P_\phi)$, the log-likelihood difference of the training data between the two model parameterizations. The EM algorithm resets the parameters $P_\phi$, greedily by maximizing Q to maximize the increase of training sample likelihood by the new parameterization, subject to the constraints that the probabilities of all possible rewrite rules for a pre-terminal must sum to 1. Therefore, for each rule NT $\alpha$, its new probability can be obtained by solving the following equation:

Eq. 7

$$\frac{\partial(Q(P_{\phi'} \mid P_\phi) + \lambda \,(\sum_{\alpha} P_{\phi'}(NT \to \alpha) - 1))}{\partial P_{\phi'}(NT \to \alpha)} = 0$$

Since $P_{\phi'}(\pi, N, w) = \prod_{NT, \alpha} P_{\phi'}(NT \to \alpha)^{c(NT \to \alpha : \pi, N, w)}$,

Eq. 8

$$\frac{\partial Q(P_{\phi'} \mid P_\phi)}{\partial P_{\phi'}(NT \to \alpha)} =$$

$$\sum_{N, w} c(N, w) \sum_{\pi} \frac{P_\phi(N, w) c(NT \to \alpha; \pi, N, w)}{P_{\phi'}(NT \to \alpha)} = -\lambda.$$

Therefore, the probability should be reset to the expected count times the normalization factor -1/$\lambda$:

Eq. 9

$$P_{\phi'}(NT \to \alpha) = -\frac{1}{\lambda}\sum_{N,w}c(N,w)\sum_{s}P_{\phi}(\pi \mid N,w)c(NT \to \alpha;\pi,N,w).$$

To calculate the expected counts, note that

Eq. 10

$$\frac{\partial P_{\phi}(N,w)}{\partial P_{\phi}(NT \to \alpha)} = \frac{\partial \sum_{\pi}P_{\phi}(\pi,N,w)}{\partial P_{\phi}(NT \to \alpha)}$$

$$= \sum_{\pi}\frac{c(NT \to \alpha;\pi,N,w)\prod_{NT,\alpha}P_{\phi}(NT \to \alpha)^{c(NT \to \alpha;\pi,N,w)}}{P_{\phi}(NT \to \alpha)}$$

$$= \sum_{\pi}\frac{P_{\phi}(\pi,N,w)c(NT \to \alpha;\pi,N,w)}{P_{\phi}(NT \to \alpha)}$$

$$= P_{\phi}(N,w)\frac{\sum_{\pi}P_{\phi}(\pi \mid N,w)c(NT \to \alpha;\pi,N,w)}{P_{\phi}(NT \to \alpha)}.$$

hence

Eq. 11

$$\sum_{\pi}P_{\phi}(\pi \mid N,w)c(NT \to \alpha;\pi,N,w)$$

$$= \frac{P_{\phi}(NT \to \alpha)}{P_{\phi}(N,w)}\frac{\partial P_{\phi}(N,w)}{\partial P_{\phi}(NT \to \alpha)}.$$

Let $E_{ij}^{k} = (N \Rightarrow w_1,\ldots,w_n)$ be the event that in the process of rewriting the pre-terminal sequence N to the word sequence w, the rule NT $\to\alpha$ is used for the kth pre-terminal in N to generate the subsequence $\alpha = w_i, \ldots, w_j$, and let $\lambda_s^t(p,q)$ be the probability that the pre-terminals from position s to t in the sequence N cover the terminal words $w_p, \ldots, w_{q=1}$. Then

Eq. 12

$$P_\phi(\mathrm{N}, w) = \sum_{ij} E_{ij}^k =$$

$$\sum_{ij} \lambda_1^{k-1}(1, i) \lambda_{k+1}^m(j+1, n+1) P_\phi(NT \to w_i, \ldots, w_j)$$

Eq. 13

$$\frac{\partial P_\phi(\mathrm{N}, w)}{\partial P_\phi(NT_k \to \alpha)} = \sum_{ij:\alpha = w_i \ldots, wj} \lambda_1^{k-1}(1, i) \lambda_{k+1}^m(j+1, n+1)$$

Therefore if we can compute $\lambda_s^t(p, q)$, we can be combine equations (9), (11) and (13) to obtain the expected counts and reset the model parameters. In fact $\lambda_s^t(p, q)$ can be computed with dynamic programming according to (14), where ε is the null string:

Eq. 14

$$\lambda_s^t(p, q) = \sum_{p \le r \le q} \lambda_s^{t-1}(p, r) \lambda_t^t(r, q);$$

$$\lambda_s^s(p, q) = \begin{cases} P_\phi(NT_s \to w_p, \ldots, w_{q-1}) & \text{if } p < q \\ P_\phi(NT_s \to \varepsilon) & \text{if } p = q \end{cases}$$

Note that $P_\phi(\mathrm{N}, w) = \lambda_1^m(1, n+1)$ can be used in equation (11).

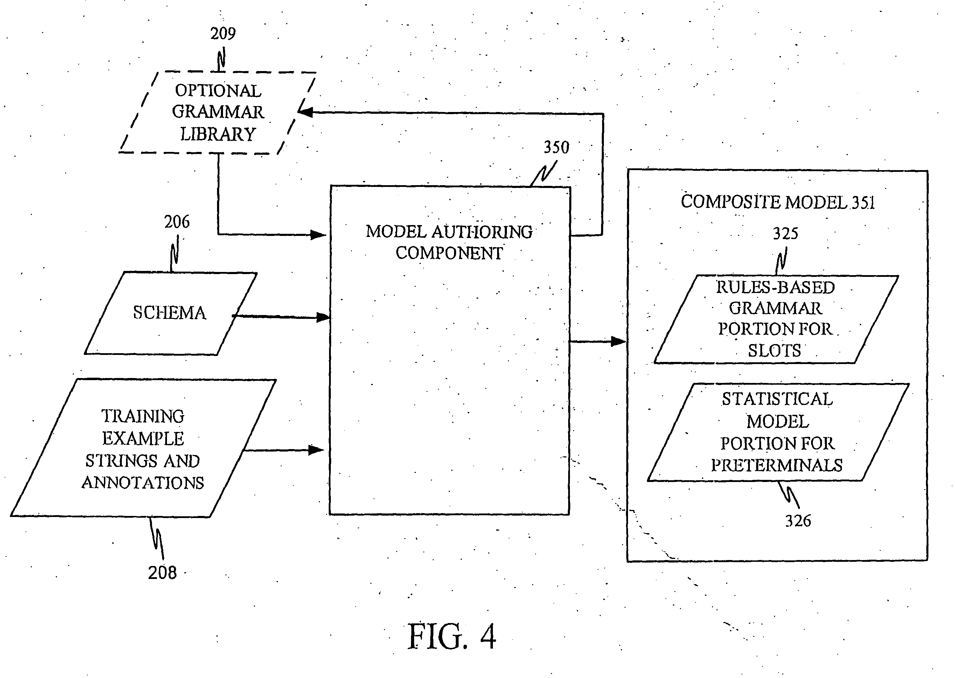

FIG. 4 illustrates another embodiment of a model authoring component 350 in accordance with a different aspect of the invention. Rules-based grammar 210 can still be less robust and more brittle than desired. For example, assume, during training that the following rules are generated, to model the following pre-terminals:
FlightPreArrivalCity→to
ShowFlightCmd→Show me the flight

Further assume that, during runtime, the sentence input is "Show flight to Boston." The input sentence will not be understood because there is no rule that says that "Show flight" is a ShowFlightCmd.

A CFG works well for high resolution understanding. High resolution understanding represents grammars which break down sentences into a large number of slots. The larger the number of slots, the higher the resolution understanding is exhibited by the grammar. CFGs generalize well in high resolution situations.

However, many applications require low resolution understanding, in which there are not a large number of slots to be filled. One such application is command and control. For example, in a command and control application, some commands which must be recognized include "ChangePassword", "ChangeBackground", and "ChangeLoginPicture". In these instances, there are no slots to be filled, and entire sentences must be recognized as the commands. During training, this may well result in a rule such as:
ChangeLoginPictureCmd→ Please change my login icon.

Since "ChangeLoginPicture" is a command, there is not a property portion to the rule. Therefore, the grammar learner simply "remembers" the full sentence in the rule it acquired. In order to recognize and invoke a user issued command, the command must match a full sentence in the training data. There is no generalization at all.

One example is drawn to, instead of modeling preterminals (such as commands, preambles and postambles) with rules in the template grammar, a statistical model (such as an n-gram) is used to model the preterminals. In one example, the text generated for the enumerated segmentations corresponding to the preterminals in the template grammar is used as training data for the n-gram (or other statistical model). Therefore, in the example above, the text string corresponding to enumerated segmentations for the preterminals together with its expected count collected in the expectation step of the EM algorithm, is used to train an n-gram for the preterminals. Thus, the text "Show me the flight" is used as training data to train an n-gram for modeling the ShowFlightCmd preterminals. Therefore, the probability that a sentence with "Show flight" in it will be recognized as a ShowFlightCmd can be calculated as follows:

$$
\begin{aligned}
&\text{Eq. 15} \\
&Pr(\texttt{<s>showflight</s>}|ShowFlightCmd) = \\
&Pr(show|\texttt{<s>}; ShowFlightCmd) * \\
&Pr(flight|show; ShowFlightCmd) * \\
&Pr(\texttt{</s>}|flight; ShowFlightCmd)
\end{aligned}
$$

While the rules would not have identified "show flight" as a ShowFlightCmd, the above n-gram probability in Eq. 15 will not be zero. The first factor and the third factor in equation 15 are nonzero because they correspond to bigrams that actually exist in the training data (i.e., [<s> show] and [flight </s>]). The second factor does not correspond to a bigram that showed up in the training data but, because of smoothing techniques like backoff (described below) it will also have a nonzero probability and can be represented as follows:

$$
\begin{aligned}
&\text{Eq. 16} \\
&Pr(flight|show; ShowFlightCmd) = \\
&backoff\_weight * Pr(flight|ShowFlightCmd)
\end{aligned}
$$

The backoff weight can be set empirically or otherwise, as desired, and the unigram probability Pr(flight|ShowFlightCmd) is nonzero because "flight" is a word in the training data.

Since Pr(show flight</s>|ShowFlightCmd)>0, the parser will consider the input sentence as a ShowFlight candidate. The ultimate interpretation of the input sentence will depend on a comparison with other interpretation candidates.

FIG. 4 thus shows another embodiment of model authoring component 350 which authors a composite model 351 that includes a grammar portion 210 (such as a CFG) that includes rules for modeling the slots and statistical model portion 326 (such as an n-gram) for identifying preterminals (such as commands, preambles and postambles). Thus, during runtime, input sentences are evaluated with the statistical model portion 326 to identify preterminals, and with the rules-based grammar portion 210 to fill slots

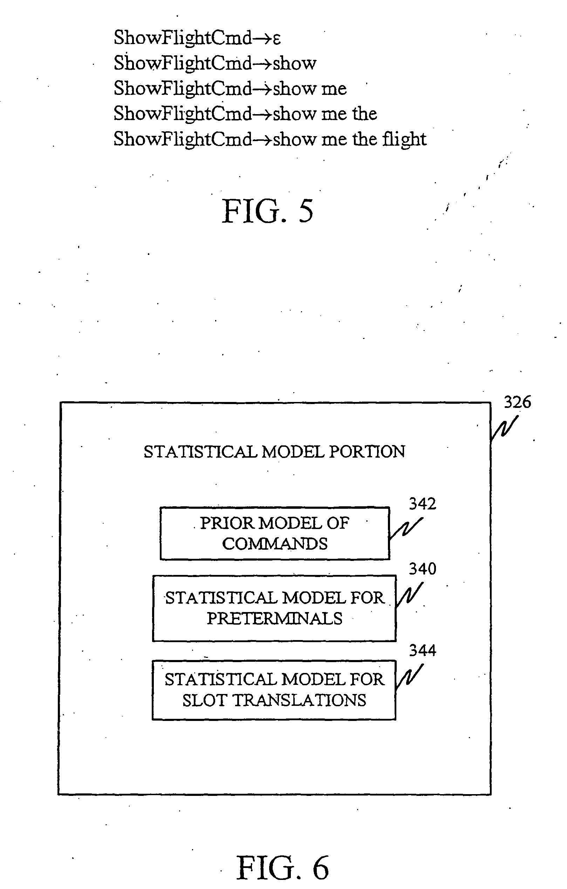

Component 350 trains composite model 351 using, in part, the EM algorithm techniques discussed above. For example, assume that FIG. 5 shows all enumerated rules for the ShowFlightCmd according to different sample segmentations.

For the model discussed above with respect to FIGS. 2-3B, during the E-step of the EM algorithm, the expected counts are collected for each of the enumerated rules shown in FIG. 5. During the M-step, the counts are normalized. However, for composite model 351, instead of normalizing the counts during the M-step of the algorithm, the text strings on the right hand side of the enumerated rules and the associated expected counts corresponding to those rules are used as training data to train and smooth an n-gram for the ShowFlightCmd preterminal.

In other words, in training the n-gram, a full count need not be added for each occurrence of a word sequence. Instead, the fractional data corresponding to the expected count for the rule associated with the training sentences (generated by EM application component 302 illustrated in FIG. 3A) is added for each occurrence of the word sequence.

Another difference from the example described for segmentation disambiguation with respect to FIGS. 2-3B involves the E-step of the EM algorithm. Instead of associating a probability with each of the enumerated rules, the probability of a rule is the product of all the n-grams in the rule.

For example, in the rules-based grammar discussed above, the rule:
ShowFlightCmd→Show me the flight

has an atomic probability associated with it. However, in composite model 351, the probability for the rule can be computed as follows:

$$Eq. 17$$

$$Pr(ShowFlightCmd \rightarrow show\ me\ the\ flight) =$$

$$Pr(show \mid <s>;\ ShowFlightCmd)\ *$$

$$Pr(me \mid show;\ ShowFlightCmd)\ *$$

$$Pr(the \mid me;\ ShowFlightCmd)\ *$$

$$Pr(flight \mid the;\ ShowFlightCmd)\ *$$

$$Pr(</s> \mid flight;\ ShowFlightCmd).$$

Also, in accordance with one example, training the statistical model for the preterminals includes applying a smoothing algorithm. For example, the training data for training the statistical model for preterminals may be relatively sparse, since it only includes the text strings enumerated for segmentation associated with the given preterminal. This would leave a relatively large amount of language expressions uncovered by the statistical model and would therefore render the statistical model relatively brittle. Thus, the model probabilities are smoothed using lower level n-grams and with a uniform distribution. In other words, if the statistical model comprises a bigram it is smoothed with unigrams which provide probabilities for the words modeled, regardless of context. In addition, the statistical model is smoothed with a uniform distribution which assigns the same probability to each word in the vocabulary. Therefore, if the word is in the vocabulary, it will not be modeled with zero probability by the statistical model. Deleted interpolation is used to find the weight for each model in the smoothing operation and linearly interpolate the models of different orders.

Component 350 can also train additional statistical model components in accordance with different embodiments of the present invention. This is illustrated in greater detail in the block diagram shown in FIG. 6. For instance, in that block diagram, statistical model portion 326 is shown as not only including a statistical model component for preterminals 340, but also a plurality of other statistical models. For example, statistical model 326 can, in one embodiment, include components 342 and 344 which include statistical models modeling the prior probability of tasks, and a statistical model for slot transitions.

For example, if a runtime input sentence is "Show flights to Boston arriving on Tuesday, 11:00 a.m." The term "arriving on" will be analyzed as indicating that "Tuesday" corresponds to an arrival date. However, there are no words before "11:00 a.m." to indicate whether it is a departure time or an arrival time. The probability of an "arrival time" slot following an "arrival date" slot will likely be higher than the probability of a "departure time" slot following an "arrival date" slot. If such slot transitions are modeled, the slot transition model will prefer that "11:00 a.m." be matched to the "arrival time" slot. It will also be noted that training a statistical model (such as an n-gram model) to model slot transitions is the same as training a statistical model (such as an n-gram model) to model the prior probability of slots, except that the order of n is different. For the prior probability of slots, a unigram model is trained, and to model slot transitions between two slots, a bigram model is trained, etc.

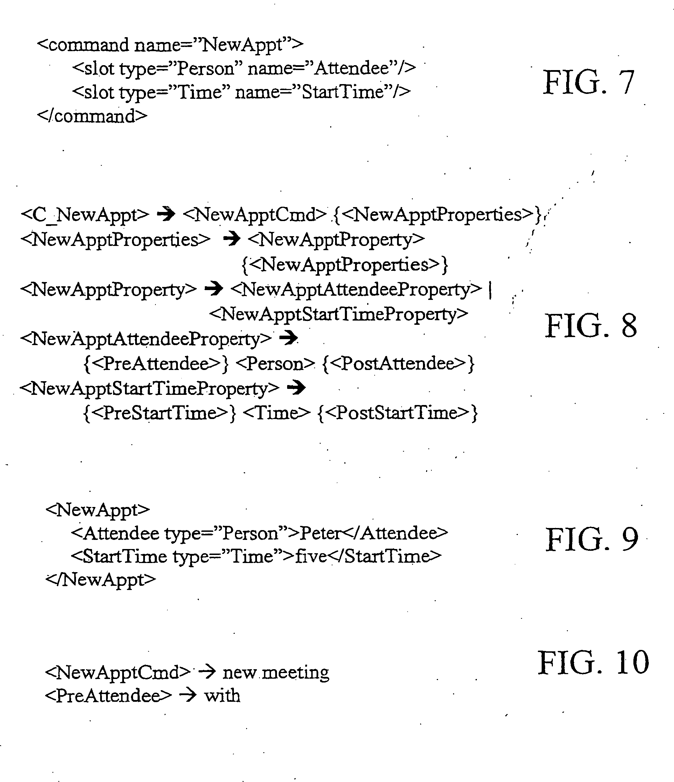

Further, some commands occur in the training data more frequently than others. Therefore, the prior probability of the commands is modeled in model 342. FIG. 7 shows one exemplary simplified example of a semantic class in a schema that defines the semantics for an appointment scheduling command NewAppt.

FIG. 8 illustrates template rules that can be automatically generated for the semantic class NewAppt, where symbols inside braces are optional. FIG. 9 illustrates one embodiment of an annotated sentence "New meeting with Peter at 5:00". FIG. 10 illustrates two rules which can be added once segmentation disambiguation has been performed as discussed above.

However, as discussed, the purely rules-based grammar can lack robustness and exhibit brittleness. Therefore, one aspect of the present invention replaces CFG rules with an n-gram to model each of the commands, preambles and post-ambles in the template grammar and to model slot transitions. The slot n-gram constrains the interpretation of slots lacking preambles and postambles. The resulting model is a composite of a statistical model (or HMM) and a CFG. The HMM models the template rules and the n-gram preterminals, and the CFG models library grammar.

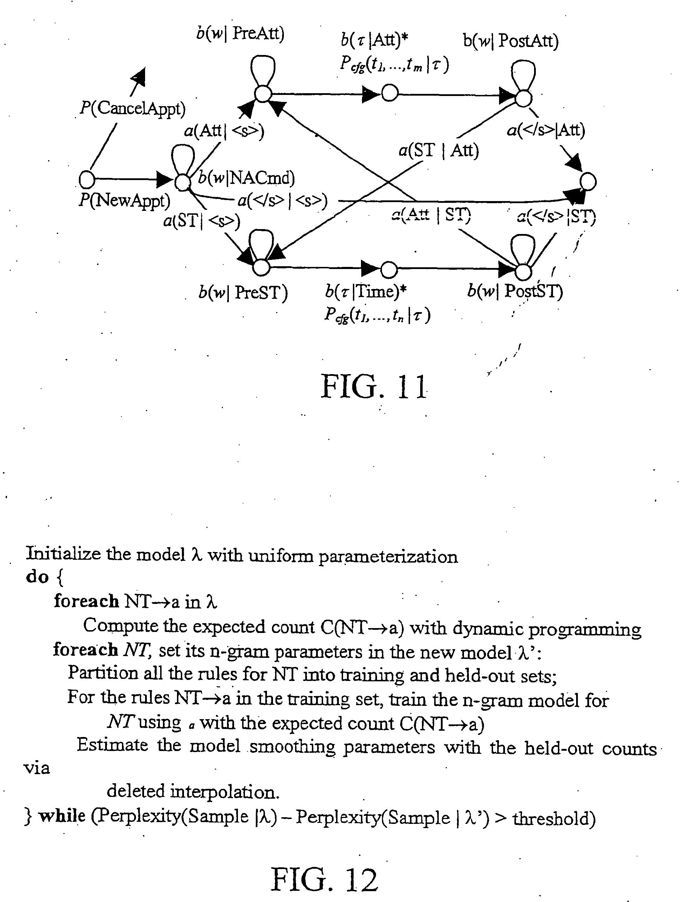

One example of such a model is shown in FIG. 11. The term "Att" is an abbreviation for "Attendee", and "ST" is an abbreviation for "StartTime". The emission probabilities b are preterminal-dependent n-grams (in the figure they are depicted as a unigram,but high order emission distribution will result in a high order HMM) and the transition probabilities a are the slot transition bigrams. The emissions $\tau$ from a slot node are library CFG non-terminals. Words are generated from them according to the CFG model $P_{CFG}$.

In the model shown in FIG. 11, the meaning of an input sentence *s* can be obtained by finding the Viterbi semantic class c and the state sequence σ that satisfy:

Eq. 18

$$(c,s) = \underset{(c,s)}{\arg\max}\, P(c,s \mid s) = \underset{(c,s)}{\arg\max}\, P(c,s,s)$$

$$= \underset{(c,s)}{\arg\max}\, P(c)' \; P(s,s \mid c)$$

The new model overcomes the limitations of a CFG model. For low resolution understanding (task classification), no property preterminals are introduced into the template grammar. Therefore, all training data are used to train and smooth the n-gram for the command preterminals. The model scales down to an n-gram classifier represented by Equation 19.

Eq. 19

$$\hat{c} = \underset{c}{\arg\max}\, P(c)P(s \mid c)$$

$$= \underset{c}{\arg\max}\, P(c)\prod_i P(w_i \mid, w_{i-1}, w_{i-2}, \ldots, w_1; cCmd)$$

The n-gram model does not require an exact rule match. Instead of making binary decisions about rule applicability, it compares the probability that the observed word sequence is generated from a state (preterminal) sequence to find the most likely interpretation. Therefore, the model itself is robust and there is no need for a robust parser.

Training is now described in greater detail with respect to the example shown in FIGS. 7-11. To train the model, the EM algorithm automatically segments word sequences and aligns each segment α to the corresponding preterminal NT in the preterminal sequence of a corresponding pair. The EM algorithm builds a model P($NT{\rightarrow}\alpha$) that assigns a probability for generating word string a from NT, and parameterizes it with an initial uniform distribution. It then iteratively refines the parameterization, as discussed above. In each iteration, it computes the expected count for the rule NT$\rightarrow\alpha$ according to the parameterization of the model in the previous iteration (the E step) and then re-estimates the probability P ($NT{\rightarrow}\alpha$) by normalizing the .expected counts (the M step). To train the new model that models the preterminals with n-grams, the expected counts collected in the E-step are used to train and smooth the n-grams in the M-step; and the n-grams are used by the EM algorithm to collect the expected counts for the segmentations. This results in a training algorithm illustrated in FIG. 12.

In one illustrative example, the threshold value illustrated in the last line of FIG.12 is set to 0.01. Of course, other threshold values can be used as well.

It is also worth noting another optional aspect. Optional grammar library 209 (shown in FIGS. 2A, 4 and 13) can be adapted to the training data 208 statistically. For example, assume that the grammar library 209 includes a relatively large city list that contains both large and small international and domestic cities. However, further assume that a specific application for which the models are being trained will only refer to domestic cities, and further that large domestic cities such as New York and Los Angles are more likely to be referred to than smaller cities. Component 202 or 350 learns the probabilities associated with the probabilistic context free grammar (PCFG) that can comprise grammar 209, from the annotated training data 208. It may be learned, for instance, that the probability for the rule Cityname $\rightarrow$ New York is greater than the probability for the rule Cityname $\rightarrow$ Tokyo. This can be done in the same way as the other probabilities discussed above are learned.

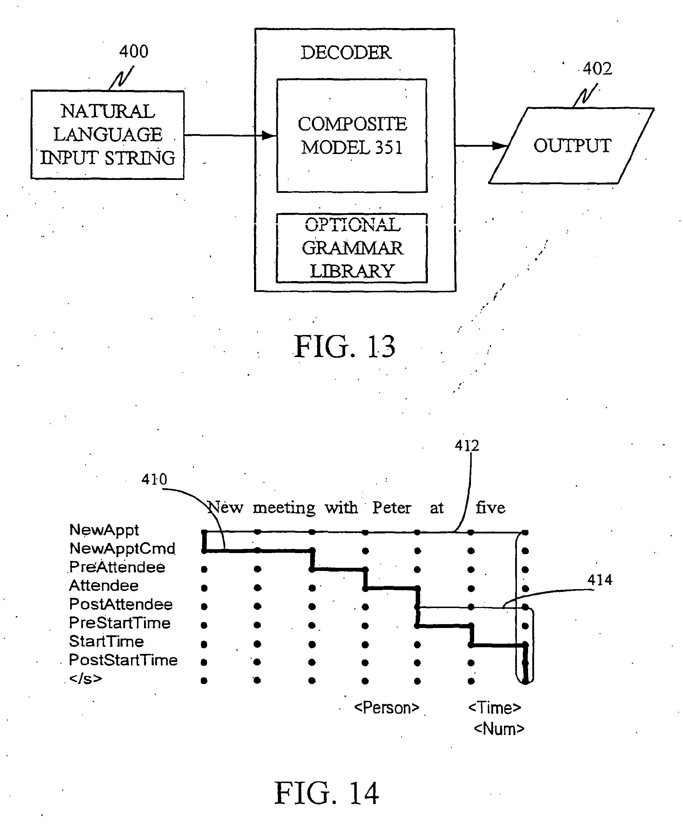

FIG. 13 illustrates a runtime system using both the rules-based grammar portion for slots and the statistical model portion for preterminals. The system receives an input, and uses the grammar portion and n-gram portion and outputs an output 402.

Decoding is described in greater detail with respect to FIG. 14. FIG. 14 illustrates a dynamic programming trellis structure representing a dynamic programming decoder for an input "new meeting with Peter at five".

The dynamic programming decoder finds the Viterbi path represented by Equation 18 above. Upon receiving the input, the decoder first uses a bottom-up chart parser to find the library grammar non-terminals that cover some input spans. In this example, it identifies "Peter" as <Person> and "five" as either <time> or <num>. The decoder then searches through the trellis starting from the semantic class nodes at the first column (the example only shows the semantic class NewAppt). At each node, it makes transitions to other nodes in the same column (switching to a different non-terminal) or to the next node in the same row (consuming an input word by the non-terminal). The search continues from left to right until it reaches the right most column. When it makes a transition; a score is obtained by adding an appropriate log probability to the score of the starting node. The score is then compared with that of the destination node, and replaces it if the new score is higher. Below the trellis are the non-terminals identified by a chart parser. The thick path 410 represents the Viterbi interpretation. A higher thin path 412, identifies the correct tasks, but neither of the slots. A lower thin path 414 (which shares part of Viterbi path 410) identifies the attendee but not the start time slot. It treats "at five" as the postamble for the attendee. The log probability for each of the first nine transitions shown in FIG. 14 are listed below for the Viterbi path 410.

| | |
|---|---|
| 1. log P(NewAppt) | // Class Prior |
| 2. log b(New \| <s>; NewApptCmd) | // Word bigram |
| 3. log $b$(meeting \| new; NewApptCmd) | // Word bigram |
| 4. log $b$(</s> \| meeting; NewApptCmd) + | // Word bigram |
| log $a$( Attendee \| <s>; NewAppt) | // Slot bigram |
| 5. log $b$(with \| I <s>; PreAttendee) | // Word bigram |
| 6. log $b$(</s> \| with; PreAttendee) | // Word bigram |
| 7. log $P_{cfg}$(Peter \| <Person>) | // PCFG |
| 8. 0 | |
| 9. log $b$(</s> \| <s>; PostAttendee) + | // Word bigram |
| log $a$( StartTime \| Attendee; NewAppt) | //Slot bigram |

Any desired pruning mechanism can be used. For example, one pruning mechanism provides that at each column of the trellis, no transition is made out of a node if its score is smaller than a threshold (such as 5.0) less then the maximum score in the same column. In other words, a path is not extended if it is $10^5$ times less likely than another that leads to a node in the same column. The decoder runs an order of magnitude faster than the robust parser after pruning.

In accordance with one embodiment of the present invention, the composite model 351 is not only used in a natural language understanding system, but can also be used in a speech recognition system. In such an embodiment, the speech recognition system can perform both speech recognition and natural language understanding in a single pass.

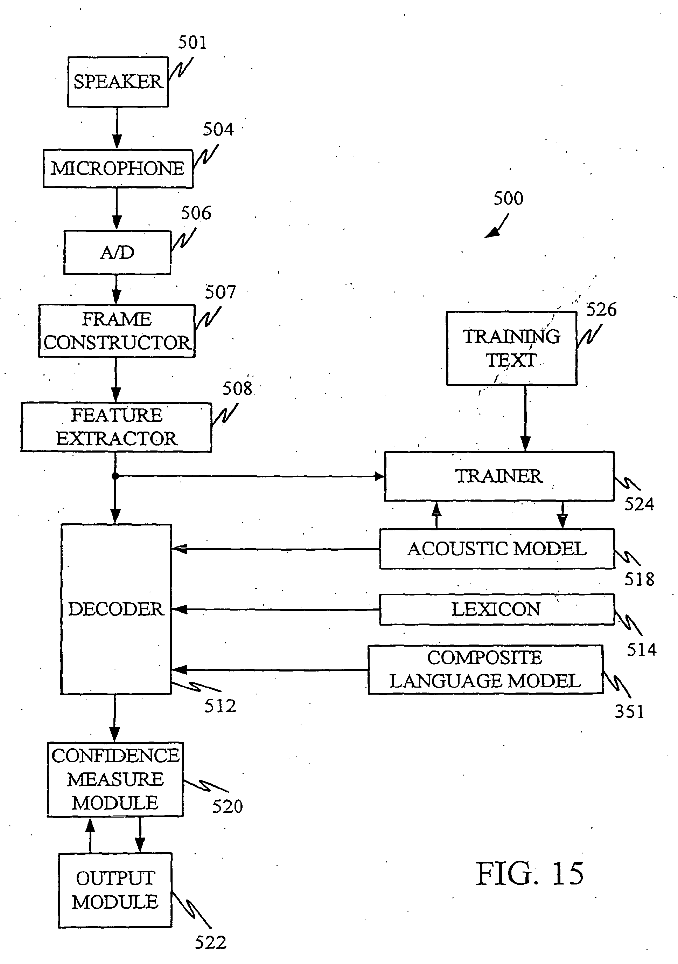

FIG. 15 illustrates a block diagram of one illustrative speech recognition system 500 in which composite model 351 is used. Of course, since composite model 351 is implemented in the speech recognition system shown in FIG. 15, system 500 can also perform natural language understanding as well as speech recognition. Before describing this in greater detail, a brief discussion of the overall operation of system 500 is provided.

In FIG. 15, a speaker 501 speaks into a microphone 504. The audio signals detected by microphone 504 are converted into electrical signals that are provided to analog-to-digital (A-to-D) converter 506.

A-to-D converter 506 converts the analog signal from microphone 504 into a series of digital values. In several embodiments, A-to-D converter 506 samples the analog signal at 16 kHz and 16 bits per sample, thereby creating 32 kilobytes of speech data per second. These digital values are provided to a frame constructor 507, which, in one embodiment, groups the values into 25 millisecond frames that start 10 milliseconds apart.

The frames of data created by frame constructor 507 are provided to feature extractor 508, which extracts a feature from each frame. Examples of feature extraction modules include modules for performing Linear Predictive Coding (LPC), LPC derived cepstrum, Perceptive Linear Prediction (PLP), Auditory model feature extraction, and Mel-Frequency Cepstrum Coefficients (MFCC) feature extraction. Note that the invention is not limited to these feature extraction modules and that other modules may be used within the context of the present invention.

The feature extraction module 508 produces a stream of feature vectors that are each associated with a frame of the speech signal. This stream of feature vectors is provided to a decoder 512, which identifies a most likely sequence of words based on the stream of feature vectors, a lexicon 514, language model 351, and the acoustic model 518. The particular method used for decoding is not important to the present invention.

The most probable sequence of hypothesis words can be provided to an optional confidence measure module 520. Confidence measure module 520 identifies which words are most likely to have been improperly identified by the speech recognizer. This can be based in part on a secondary acoustic model (not shown). Confidence measure module 520 then provides the sequence of hypothesis words to an output module 522 along with identifiers indicating which words may have been improperly identified. Those skilled in the art will recognize that confidence measure module 520 is not necessary for the practice of the present invention.

During training, a speech signal corresponding to training text 526 is input to trainer 524[yw1], along with a lexical transcription of the training text 526. Trainer 524 trains acoustic model 518 based on the training inputs. Training of composite language model 351 is discussed above.

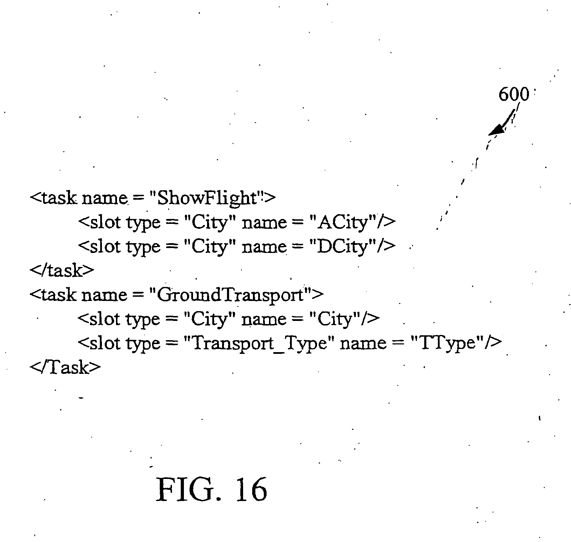

As also discussed above, model 351 uses a statistical portion (implemented, for example, using Hidden Markov model technology) to encode the structural information of an application schema, and uses a rules-based portion (implemented using, for example, CFG technology) to model the emissions of some HMM states. FIGS. 16-17B illustrate the topology of a model in such a way as to facilitate a discussion of how the model can be represented in a finite state representation, in a compact manner, even though it accounts for unseen words.

FIG. 16 is one illustrative embodiment of another application schema 600. Schema 600 simply states that the application supports two types of information queries: those for flight information (the ShowFlight task) and those for ground transportation information (the GoundTransport task). In order to obtain flight information, a user must provide information about the arrival city (ACity) and/or the departure city (DCity) slots, so the system can search for the information according to the user's specification. The type of a slot specifies the requirement for its "fillers". For both the ACity and DCity slots, the filler must be an expression modeled in the grammar library that refers to an object of the type "City".

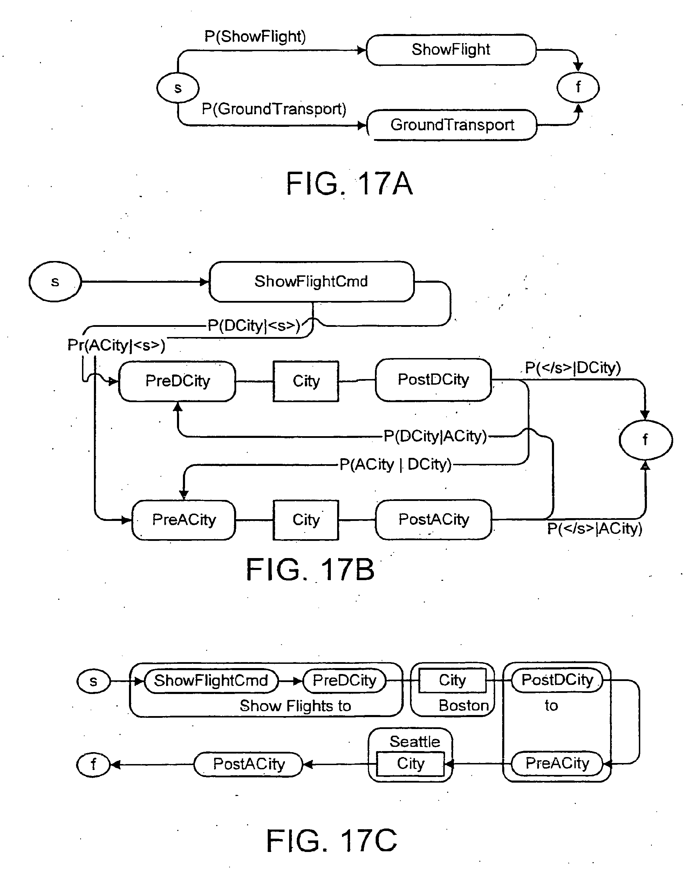

FIGS. 17A and 17B show a statistical model portion (an HMM) that incorporates the semantic constraints of schema 600 into a natural language understanding rules-based grammar (such as a CFG). FIG. 17A illustrates a top-level structure 602 that has two branches, one leading to ShowFLight subnetwork 604 and the other leading to GroundTransport network 606. The transition weights on each of the branches are the probabilities for the two tasks. Therefore, the transition weight from the S-node to the ShowFlight subnetwork 604 corresponds to the probability of a ShowFlight task (or command), while the transition probability to the GroundTransport subnetwork 606 corresponds to the probability of a GroundTransport task.

FIG. 17B illustrates the ShowFlight subnetwork 604 model in greater detail, and use of the subnetwork model is illustrated by FIG. 17C. The ShowFlight subnetwork model shown in FIG. 17B models the linguistic expressions that users may use to issue a ShowFlight command. The subnetwork model starts with a command portion (such as "Show me the flight"), followed by the expressions for slots. Each slot is bracketed by a preamble and post-amble, which serve as the linguistic context for the slot. For example, the word "from" is a preamble for the DCity slot. It signals that the City following it is likely a departure city. The slots are interconnected, and the connections are weighted with the bigram probability for slot transitions, which is estimated from training data.

In the subnetwork model 604, the command, preambles and post-ambles are modeled with statistical n-gram models. These are illustrated by the oval portions in subnetwork model 604. The slot fillers are modeled with probabilistic CFG rules from a grammar library. These are illustrated by the rectangles shown in subnetwork model 604. The probabilities for the rules in the grammar library are illustratively tuned using domain specific data and are smoothed. The n-grams in the model 604 are trained with partially labeled training data. As discussed above, the EM algorithm can be used to train the n-grams in the network, where the alignments are treated as hidden variables.

Unlike previous robust understanding technology, which relied on a robust parser to skip the words not covered by a grammar, the use of n-gram models for the pre-terminals in a grammar makes the model robust in itself. This enables one feature of the present invention, which uses the composite model 351 (one embodiment which is shown in FIGS. 17A and 17B) not only in natural language understanding, but also in speech recognition. This overcomes the suboptimal two-pass approach used in prior systems to accomplish speech recognition and natural language understanding, and it uses prior knowledge so that it can illustratively generalize better than prior systems.

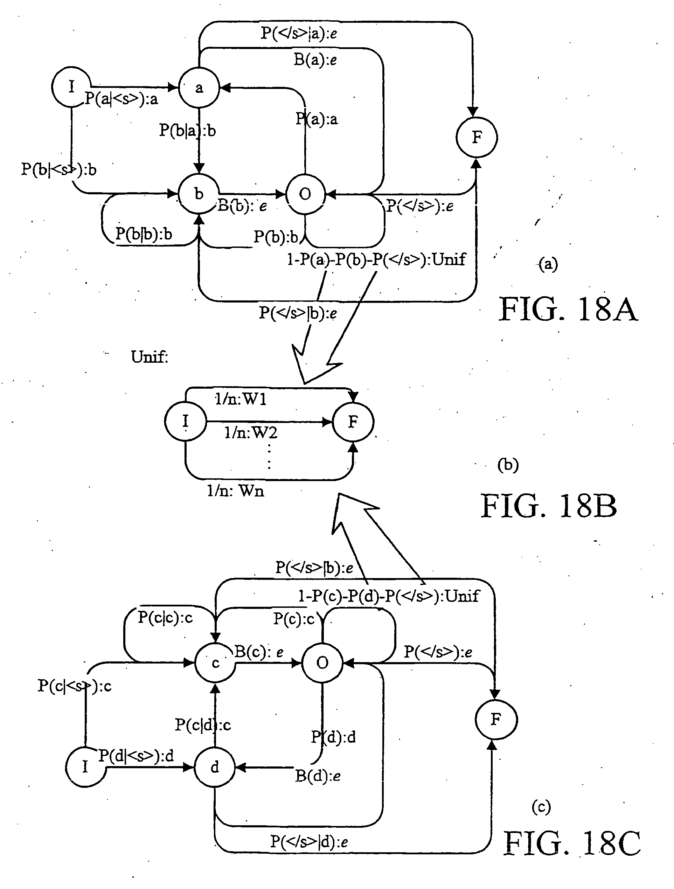

However, to use the model 351 in a speech recognition system (such as a language model shown in FIG. 15), the model is first converted into a format that decoder 512 can accept as its language model. Therefore, the statistical n-gram models used to model the command, preambles and post-ambles (i.e., those n-grams inside the CFG) are converted into probabilistic finite state automata. The converted n-grams and the top level HMM structure (such as 602 shown in FIG. 17A), together with the rules in the library grammar, form a probabilistic context-free grammar (PCFG) language model. This conversion is based on a well-known conversion algorithm such as that set out in Riccardi, G., et al., STOCHASTIC AUTOMATA FOR LANGUAGE MODELING, Computer Speech and Language, 10:pages 265-293 (1996), which also discloses uniform linear discounting. However, one significant modification is made to the conventional algorithm in order to significantly reduce the size of the model. This is illustrated by FIGS. 18A, 18B and 18C. FIGS. 18A and 18C illustrate finite state representations of the bigram language models for two pre-terminals, each has been trained with two observed words (designated a,b and c, d, respectively). The label on each arc in the model illustrates the weight and output symbol. The letter I represents the initial state, while the letter O represents the back-off state, and the letter F represents the final state. FIG. 18B is a finite state representation of a shared uniform distribution which is used to assign a back-off probability to unseen words (i.e., those words that were not seen in the training data for the specific n-gram model as shown in FIG. 18A).

To illustrate the operation of the model shown in FIG. 18A, consider the probabilities associated with an utterance of the word "a" followed by an utterance of the word "b". This corresponds to a combination of the following probabilities:

P(a|<s>):a
P(b|a):b
Pr(</s>|b)

The first probability is the n-gram probability of the word "a" following the beginning of sentence symbol. This corresponds to the transition from the initial state I to the state a. The second probability is the probability of the word "b" following the word "a", which is labeled on the transition from state a to state b. The third probability is the probability of the end of sentence symbol following the word "b", that is labeled on the transition from state b to the final state F. The sequential transitions form a path in the finite state machine that accepts the utterance "a b" and computes the probability of the utterance by multiplying the probabilities of the transitions in the path.

For an utterance of a word sequence that is not observed in the training data, the finite state machine will not assign probability of 0 to it. Instead, a path traverses through the back-off state, using the product of the back-off weight and the unigram probability as the bigram probability of the unseen event. For example, the probability of the utterance "a a" is calculated via the following path in FIG. 18A:

I → a P(a|<s>):a
a → O B (a) :ε
O → a P(a):a
a → F P(</s>|a).

Here P(a | a) = B(a) * P(a) > 0 even though the bigram "a a" is not observed in the training data.

For an utterance of a word that is unseen in the training data for the particular n-gram being modeled, if the word is in the vocabulary, it is assigned a probability backed-off to the uniform probability $1/|V|$, where $|V|$ is the vocabulary size. In prior systems, this results in a self-loop over the back-off state O for every unseen word. Because the training data for each n-gram in the composite model may be relatively sparse, many words in the vocabulary associated with the model will be unseen in the training data for each n-gram. Because model 351 will illustratively support a vocabulary having a large number of words (illustratively several hundred) and because the model will also have a large number of n-grams (also illustratively several hundred) the number of self-loops through the back-off state O in the entire composite model would be very large.

Therefore, in accordance with one illustrative embodiment of the present invention, instead of adding a loop for each unseen word, the n-gram models in composite model 351 (such as that shown in FIG. 18A) include a single loop $620_{[YW2]}$ through the back-off state O. The single loop 620 refers to a shared uniform distribution model such as that shown in FIG. 18B.

In the uniform distribution model shown in FIG. 18B, the letter n refers the number of words in the vocabulary where w1 refers the first word "a" ; w2 refers to the second word "b", etc. Thus, for each unseen word, instead of looping over the back-off state, the model is smoothed approximately with the self-loop labeled with the uniform distribution over the back-off state O. The uniform distribution model shown in FIG. 18B is shared for all of the n-grams in composite model 351. Each of the n-grams simply has a loop, similar to loop 620 shown in FIG. 18A, which refers to the uniform distribution model shown in FIG. 18B. This is illustrated in FIG 18C. This saves a substantial amount of space in the model 351 rendering it much more compact than prior systems.

It can thus be seen that various embodiments of the present invention not only include a statistical model portion for pre-terminals, but also include a rules-based grammar portion to fill slots, and this composite model is used in speech recognition or combination speech recognition and natural language understanding systems. This substantially reduces inefficiencies associated with sub-optimal two-pass systems and also includes prior knowledge in the language model to compensate for the lack of language model training data (i.e., to address data sparseness). The combined approach also reduces overall understanding error rate. The invention also includes smoothing the n-gram models by referring to a separate uniform distribution model, instead of using self-loops across the back-off state in the n-gram model. This reduces the size of the model rendering it more compact.

Although the present invention has been described with reference to particular embodiments, workers skilled in the art will recognize that changes may be made in form and detail without departing from the scope of the invention as defined by the claims.

**Claims**

**1.** A speech processing system, comprising:

an acoustic model (518);

a composite language model (351) including a rules-based model portion (325), a plurality of statistical model portions (320, Figs. 18A, 18C); and a separate shared uniform distribution backoff model (Fig. 18B), wherein each statistical model portion (326, Figs. 18A, 18C) includes a reference to the separate shared backoff model; and

a decoder (512) coupled to the acoustic model (518) and the composite language model (351) and configured to map portions of a natural language speech input (400) to pre-terminals and slots, derived from a schema (206), based on the acoustic model (518) and the composite language model (351).

2. The speech processing system of claim 1 wherein the decoder (512) is configured to map portions of the natural language speech input (400) to the slots based on the rules-based model portion (325) of the composite language model (351).

3. The speech processing system of claim 1 wherein the decoder (512) is configured to map portions of the natural language speech input (400) to the pre-terminals based on the plurality of statistical model portions (326, 340-344) of the composite language model (351).

4. The speech processing system of claim 1 wherein the plurality of statistical model portions (326, 340-344) of the composite language model (351) comprises:

a plurality of statistical N-gram models (326), one statistical N-gram model corresponding to each pre-terminal.

5. The speech processing system of claim 4 wherein the composite language model (351) supports a vocabulary of words and wherein the statistical N-gram models(326) are trained based on training data (208), and wherein words in the vocabulary that are not used to train a specific statistical N-gram model(326) comprise unseen words for the specific statistical N-gram model.

6. The speech processing system of claim 5 wherein the statistical model portion (326) of the composite language model (351) further comprises:

a backoff model portion (Fig. 18B) which, when accessed, is configured to assign a backoff score to a word in the vocabulary.

7. The speech processing system of claim 6 wherein each statistical N-gram model (326) includes a reference to the backoff model portion (Fig. 18B) for all unseen words.

8. The speech processing system of claim 7 wherein the backoff model portion (Fig. 18B) comprises:

a uniform distribution N-gram that assigns a uniform score to every word in the vocabulary.

9. The speech processing system of claim 1 wherein the rules-based model portion (325) comprises:

a context free grammar (CFG).

10. A method of assigning probabilities to word hypotheses during speech processing, comprising:

receiving a word hypothesis;
accessing a composite language model (351) having a plurality of statistical models (326, Figs. 18A, 18C) and a plurality of rules-based models (325);
assigning an N-gram probability, with an N-gram model, to the word hypothesis if the word hypothesis corresponds to a word seen during training of the N-gram model; and
referring to a separate shared uniform distribution backoff model (Fig. 18B) for the word hypothesis if the word hypothesis corresponds to a word unseen during training of the N-gram model; and
assigning a backoff probability to each word hypothesis, that corresponds to an unseen word, with the backoff model.

11. The method of claim 10 and further comprising:

mapping the word hypotheses to slots derived from an input schema (206) based on the rules-based models (325) in the composite language model(351).

12. The method of claim 11 and further comprising:

mapping the word hypotheses to pre-terminals derived from the input schema (206) based on probabilities assigned by the N-gram models(326) and the backoff model(Fig. 18B) in the composite language model (351).

13. The method of claim 12 wherein referring to a separate backoff model (Fig. 18B) comprises:

referring to a uniform distribution N-gram.

14. The method of claim 13 wherein assigning a backoff probability comprises:

assigning a uniform distribution score to every word in the vocabulary.

**Patentansprüche**

1. Sprachverarbeitungssystem, das umfasst:

ein akustisches Modell (518);
ein zusammengesetztes Sprachmodell (351), das einen regelbasierten Modellteil (325), eine Vielzahl statistischer Modellteile (326, Fig. 18A, 18C) und ein separates gemeinsam genutztes Backoff-Modell einheitlicher Verteilung (Figl 18B) enthält, wobei jeder statistische Modell-Teil (326, Fig. 18A, 18C) einen Bezug zu dem separaten gemeinsam genutzten Backoff-Modell enthält; und
eine Decodiereinrichtung (512), die mit dem akustischen Modell (518) und dem zusammengesetzten Sprachmodell (351) gekoppelt und so konfiguriert ist, dass sie Teile einer Eingabe (400) in natürlicher Sprache auf Präterminals und Schlitze, die aus einem Schema (206) hergeleitet werden, auf Basis des akustischen Modells (518) und des zusammengesetzten Sprachmodells (351) abbildet.

2. Sprachverarbeitungssystem nach Anspruch 1, wobei die Decodiereinrichtung (512) so konfiguriert ist, dass sie Teile der natürlichen Spracheingabe (400) auf den Schlitzen auf Basis des regelbasierten Modell-Teils (325) des zusammengesetzten Sprachmodells (351) abbildet.

3. Sprachverarbeitungssystem nach Anspruch 1, wobei die Decodiereinrichtung (512) so konfiguriert ist, dass sie Teile der natürlichen Spracheingabe (400) auf den Präterminals auf Basis der Vielzahl statistischer Modell-Teile (326, 340-344) des zusammengesetzten Sprachmodells (351) abbildet.

4. Sprachverarbeitungssystem nach Anspruch 1, wobei die Vielzahl statistischer Modellabschnitte (326, 340-344) des zusammengesetzten Sprachmodells (351) umfasst:

eine Vielzahl statistischer N-Gram-Modelle (326), wobei ein statistisches N-Gram-Modell jedem Präterminal entspricht.

5. Sprachverarbeitungssystem nach Anspruch 4, wobei das zusammengesetzte Sprachmodell (351) ein Vokabular aus Wörtern unterstützt, die statistischen N-Gram-Modelle (326) auf Basis von Trainingsdaten (208) trainiert werden und Wörter in dem Vokabular, die nicht verwendet werden, um ein spezifisches statistisches N-Gram-Modell (326) zu trainieren, ungesehene Worte für das spezifische statistische N-Gram-Modell umfassen.

6. Sprachverarbeitungssystem nach Anspruch 5, wobei der statistische Modell-Teil (326) des zusammengesetzten Sprachmodells (351) des Weiteren umfasst:

einen Backoff-Modell-Teil (Fig. 18B), der so konfiguriert ist, dass er, wenn darauf zugegriffen wird, einem Wort in dem Vokabular ein Backoff-Ergebnis (backoff score) zuordnet.

7. Sprachverarbeitungssystem nach Anspruch 6, wobei jedes statistische N-Gram-Modell (326) einen Bezug zu dem Backoff-Modell-Teil (Fig. 18B) für alle ungesehenen Worte enthält.

8. Sprachverarbeitungssystem nach Anspruch 7, wobei der Backoff-Modell-Teil (Fig. 18B) umfasst:

   ein N-Gram einheitlicher Verteilung, das jedem Wort in dem Vokabular ein einheitliches Ergebnis zuordnet.

9. Sprachverarbeitungssystem nach Anspruch 1, wobei der regelbasierte Modell-Teil (325) umfasst:

   eine kontextfreie Grammatik (CFG).

10. Verfahren zum Zuweisen von Probalitäten zu Wort-Hypothesen bei Sprachverarbeitung, das umfasst:

    Empfangen einer Wort-Hypothese;
    Zugreifen auf ein zusammengesetztes Sprachmodell (351) mit einer Vielzahl statistischer Modelle (326, Fig. 18A, 18C) und einer Vielzahl regelbasierter Modelle (325);
    Zuweisen einer N-Gram-Probabilität mit einem N-Gram-Modell zu der Wort-Hypothese, wenn die Wort-Hypothese einem Wort entspricht, das beim Trainieren des N-Gram-Modells gesehen wurde; und
    Bezugnehmen auf ein separates gemeinsam genutztes Backoff-Modell einheitlicher Verteilung (Fig. 18B) für die Wort-Hypothese, wenn die Wort-Hypothese einem Wort entspricht, das beim Training des N-Gram-Modells nicht gesehen wurde; und
    Zuweisen einer Backoff-Probabilität zu jeder Wort-Hypothese, die einem nicht gesehenen Wort entspricht, mit dem Backoff-Modell.

11. Verfahren nach Anspruch 10, das des Weiteren umfasst:

    Abbilden der Wort-Hypothese auf Schlitzen, die aus einem Eingabeschema (206) hergeleitet werden, auf Basis der regelbasierten Modelle (325) in dem zusammengesetzten Sprachmodell (351).

12. Verfahren nach Anspruch 11, das des Weiteren umfasst:

    Abbilden der Wort-Hypothese auf Präterminalen, die aus dem Eingabeschema (206) hergeleitet werden, auf Basis von durch die N-Gram-Modelle (326) zugewiesenen Probabilitäten und des Backoff-Modells (Fig. 18B) in dem zusammengesetzten Sprachmodell (351).

13. Verfahren nach Anspruch 12, wobei Bezugnehmen auf das separate Backoff-Modell (Fig. 18B) umfasst:

    Bezugnehmen auf ein N-Gram einheitlicher Verteilung.

14. Verfahren nach Anspruch 13, wobei Zuweisen einer Backoff-Probabilität umfasst:

    Zuweisen eines Ergebnisses einheitlicher Verteilung zu jedem Wort in dem Vokabular.


**Revendications**

1. Système de traitement de la parole, comprenant :

   un modèle acoustique (518) ;
   un modèle de langage composite (351) comprenant une partie de modèle basé sur des règles (325), de multiples parties de modèle statistique (326, figures 18A, 18C), et un modèle de repli partagé séparé de distribution uniforme (figure 18B) dans lequel chaque partie de modèle statistique (326, figure 18A, 18C) comprend une référence au modèle de repli partagé séparé ; et
   un décodeur (512) couplé au modèle acoustique (518) et au modèle de langage composite (351) et configuré pour mettre en correspondance des parties d'une entrée vocale en langage naturel (400) avec des préterminaux et des emplacements, dérivés d'un schéma (206), en fonction du modèle acoustique (518) et du modèle de langage composite (351).

2. Système de traitement de la parole selon la revendication 1, dans lequel le décodeur (512) est configuré pour mettre en correspondance des parties de l'entrée vocale en langage naturel (400) avec les emplacements en fonction de la partie de modèle basé sur des règles (325) du modèle de langage composite (351).

**3.** Système de traitement de la parole selon la revendication 1, dans lequel le décodeur (512) est configuré pour mettre en correspondance des parties de l'entrée vocale en langage naturel (400) avec les préterminaux en fonction des multiples parties de modèle statistique (326, 340-344) du modèle de langage composite (351).

**4.** Système de traitement de la parole selon la revendication 1, dans lequel les multiples parties de modèle statistique (326, 340-344) du modèle de langage composite (351) comprend :

de multiples modèles N-gramme statistiques (326), un modèle N-gramme statistique correspondant à chaque préterminal.

**5.** Système de traitement de la parole selon la revendication 4, dans lequel le modèle de langage composite (351) supporte un vocabulaire de mots et dans lequel les modèles N-gramme statistiques (326) font l'objet d'un apprentissage en fonction de données d'apprentissage (208), et dans lequel des mots du vocabulaire qui ne sont pas utilisés pour assurer l'apprentissage d'un modèle N-gramme statistique spécifique (326) comportent des mots non rencontrés pour le modèle N-gramme statistique spécifique.

**6.** Système de traitement de la parole selon la revendication 5, dans lequel la partie de modèle statistique (326) du modèle de langage composite (351) comprend en outre:

une partie de modèle de repli (figure 18B) qui, lorsqu'on y accède, est configurée pour affecter une note de repli à un mot du vocabulaire.

**7.** Système de traitement de la parole selon la revendication 6, dans lequel chaque modèle N-gramme statistique (326) comprend une référence à la partie de modèle de repli (figure 18B) pour tous les mots non rencontrés.

**8.** Système de traitement de la parole selon la revendication 7, dans lequel la partie de modèle de repli (figure 18B) comprend :

un N-gramme de distribution uniforme qui affecte une note uniforme à chaque mot du vocabulaire.

**9.** Système de traitement de la parole selon la revendication 1, dans lequel la partie de modèle basé sur des règles (325) comprend:

une grammaire non contextuelle (CFG).

**10.** Procédé d'affectation de probabilité à des hypothèses de mot pendant un traitement de la parole, comprenant :

la réception d'une hypothèse de mot ;
l'accès à un modèle de langage composite (351) comportant de multiples modèles statistiques (326, figure 18A, 18C) et de multiples modèles basés sur des règles (325) ;
l'affectation d'une probabilité N-gramme, avec un modèle N-gramme, à l'hypothèse de mot si celle-ci correspond à un mot rencontré pendant l'opération d'apprentissage du modèle N-gramme ; et
la référence à un modèle de repli partagé séparé de distribution uniforme (figure 18B) pour l'hypothèse de mot si celle-ci correspond à un mot non rencontré pendant l'opération d'apprentissage du modèle N-gramme ; et
l'affectation d'une probabilité de repli à chaque hypothèse de mot, qui correspond à un mot non rencontré, avec le modèle de repli.

**11.** Procédé selon la revendication 10 et comprenant en outre :

la mise en correspondance des hypothèses de mot avec des emplacements dérivés d'un schéma d'entrée (206) en fonction des modèles basés sur des règles (325) dans le modèle de langage composite (351).

**12.** Procédé selon la revendication 11 et comprenant en outre :

la mise en correspondance des hypothèses de mot avec des préterminaux dérivés du schéma d'entrée (206) en fonction de probabilités affectées par les modèles N-gramme (326) et
le modèle de repli (figure 18B) dans le modèle de langage composite (351).

**13.** Procédé selon la revendication 12 dans lequel la référence à un modèle de repli séparé (figure 18B) comprend:

la référence à un N-gramme de distribution uniforme.

**14.** Procédé selon la revendication 13 dans lequel l'affectation d'une probabilité de repli comprend:

l'affectation d'une note de distribution uniforme à chaque mot du vocabulaire.

FIG. 1

EP 1 475 779 B1

FIG. 2A

212

```
<Command type="ShowFlight">
    <slot type="Flight"/>
</command>
<object type="Flight">
    <slot type="Time" name="Depart"/>
    <slot type="Time" name="Arrival"/>
    <slot type="City" name="Depart"/>
    <slot type="City" name="Arrival"/>
</object>
```

# FIG. 2B

1. <ShowFlight> ⟶ <ShowFlightCmd><ShowFlightProperties>
2. <ShowFlightProperties> ⟶ <ShowFlightProperty><Opt.><ShowFlightProperties>
3. <ShowFlightProperty> ⟶ <ShowFlightPreFlight><Flight><ShowFlightPostFlight>
4. <Flight> ⟶ <FlightProperties>
5. <FlightProperties> ⟶ <FlightProperty><Opt.><FlightProperties>
6. <FlightProperty> ⟶ <FlightPreDepartureCity><City><FlightPostDepartureCity>
7. <FlightProperty> ⟶ <FlightPreArrivalCity><City><FlightPostArrivalCity>
8. <FlightProperty> ⟶ <FlightPreDepartureTime><Time><FlightPostDepartureTime>
9. <FlightProperty> ⟶ <FlightPreArrivalTime><Time><FlightPostArrivalTime>

⋮

# FIG. 2C

213

"Flight from Seattle to Boston"

214

```
<ShowFlight>
     <Flight>
          <City name = "Arrival">
               <Boston>
          </City>
          <City name = "Departure">
               <Seattle>
          </City>
     </Flight>
</ShowFlight>
```

# FIG. 2D

FIG. 2E

| Example | Possible Preterminals | |
|---|---|---|
| From | ShowFlightCmd | FlightPreDepartureCity |
| Flight from | ShowFlightCmd | FlightPreDepartureCity |
| Flight to | ShowFlightCmd | FlightPreArrivalCity |

# FIG. 2F

| Possible Re-write Rule | Count | Probability | $\tilde{C}$ |
|---|---|---|---|
| SFCmd→ ε (empty set) | 1/2+1/3+1/3=7/6 | 7/18 | 7/10 |
| SFCmd→ from | 1/2=3/6 | 3/18 | 3/10 |
| SFCmd→ flight | 1/3+1/3=4/6 | 4/18 | ⋮ |
| SFCmd→ flight from | 1/3=2/6 | 2/18 | |
| SFCmd→ flight to | 1/3=2/6 | 2/18 | |
| FPDCity→ ε | 1/2+1/3=5/6 | 5/12 | |
| FPDCity→ from | 1/2+1/3=5/6 | 5/12 | |
| FPDCity→ flight from | 1/3=2/6 | 2/12 | |
| FPACity→ ε | 1/3=1/3 | 1/3 | |
| FPACity→ to | 1/3=1/3 | 1/3 | |
| FPACity→ flight to | 1/3=1/3 | 1/3 | |

# FIG. 2G

FIG. 3A

ENUMERATE ALL POSSIBLE
SEGMENTATIONS
306

ASSIGN ALL SEGMENTATIONS
THE SAME PROBABILITY
308

ASSIGN NEW EXPECTED COUNTS TO
ENUMERATED SEGMENTATIONS BASED ON
OCCURRENCES IN EXAMPLES
310

NORMALIZE COUNTS TO
OBTAIN NEW PROBABILITIES
312

FIG. 3B

FURTHER
ITERATION
REQUIRED?
314

YES

NO

PROVIDE SEGMENTATIONS AND
PROBABILITITES TO PRUNING COMPONENT
316

PRUNE SEGMENTATIONS
318

REVISE ENUMERATED RULES TO OBTAIN
FINAL RULES BASED ON PRUNED
SEGMENTATIONS
320

209

OPTIONAL
GRAMMAR
LIBRARY

350

COMPOSITE MODEL 351

325

RULES-BASED
GRAMMAR
PORTION FOR
SLOTS

206

SCHEMA

MODEL AUTHORING
COMPONENT

208

TRAINING
EXAMPLE
STRINGS AND
ANNOTATIONS

STATISTICAL
MODEL
PORTION FOR
PRETERMINALS

326

FIG. 4

ShowFlightCmd→ε
ShowFlightCmd→show
ShowFlightCmd→show me
ShowFlightCmd→show me the
ShowFlightCmd→show me the flight

# FIG. 5

326

**STATISTICAL MODEL PORTION**

342

PRIOR MODEL OF COMMANDS

340

STATISTICAL MODEL FOR PRETERMINALS

344

STATISTICAL MODEL FOR SLOT TRANSLATIONS

# FIG. 6

```
<command name="NewAppt">
    <slot type="Person" name="Attendee"/>
    <slot type="Time" name="StartTime"/>
</command>
```

FIG. 7

```
<C_NewAppt> → <NewApptCmd> {<NewApptProperties>}
<NewApptProperties> → <NewApptProperty>
                        {<NewApptProperties>}
<NewApptProperty> → <NewApptAttendeeProperty> |
                    <NewApptStartTimeProperty>
<NewApptAttendeeProperty> →
    {<PreAttendee>} <Person> {<PostAttendee>}
<NewApptStartTimeProperty> →
    {<PreStartTime>} <Time> {<PostStartTime>}
```

FIG. 8

```
<NewAppt>
    <Attendee type="Person">Peter</Attendee>
    <StartTime type="Time">five</StartTime>
</NewAppt>
```

FIG. 9

FIG. 10

```
<NewApptCmd> → new meeting
<PreAttendee> → with
```

$b(w|\text{PreAtt})$  $b(\tau|\text{Att})^*$  $b(w|\text{PostAtt})$
$P_{cfg}(t_1,...,t_m|\tau)$

$P(\text{CancelAppt})$

$a(\text{Att}|\langle s\rangle)$

$a(\text{ST}|\text{Att})$

$a(\langle/s\rangle|\text{Att})$

$b(w|\text{NACmd})$

$P(\text{NewAppt})$  $a(\langle/s\rangle|\langle s\rangle)$

$a(\text{ST}|\langle s\rangle)$  $a(\text{Att}|\text{ST})$  $a(\langle/s\rangle|\text{ST})$

$b(w|\text{PreST})$  $b(\tau|\text{Time})^*$  $b(w|\text{PostST})$
$P_{cfg}(t_1,...,t_n|\tau)$

# FIG. 11

Initialize the model λ with uniform parameterization
do {
    **foreach** NT→a in λ
        Compute the expected count C(NT→a) with dynamic programming
    **foreach** *NT*, set its n-gram parameters in the new model λ':
        Partition all the rules for NT into training and held-out sets;
        For the rules NT→a in the training set, train the n-gram model for
            *NT* using *a* with the expected count C(NT→a)
        Estimate the model smoothing parameters with the held-out counts
via
        deleted interpolation.
} **while** (Perplexity(Sample |λ) – Perplexity(Sample | λ') > threshold)

# FIG. 12

400

NATURAL
LANGUAGE
INPUT STRING

DECODER

COMPOSITE
MODEL 351

OPTIONAL
GRAMMAR
LIBRARY

402

OUTPUT

## FIG. 13

412

410

New meeting with Peter at five

NewAppt
NewApptCmd
PreAttendee
Attendee
PostAttendee
PreStartTime
StartTime
PostStartTime
</s>

414

<Person>

<Time>
<Num>

## FIG. 14

SPEAKER 501

MICROPHONE 504

A/D 506

FRAME CONSTRUCTOR 507

FEATURE EXTRACTOR 508

500

TRAINING TEXT 526

TRAINER 524

ACOUSTIC MODEL 518

DECODER 512

LEXICON 514

COMPOSITE LANGUAGE MODEL 351

CONFIDENCE MEASURE MODULE 520

OUTPUT MODULE 522

FIG. 15

```
<task name = "ShowFlight">
      <slot type = "City" name = "ACity"/>
      <slot type = "City" name = "DCity"/>
</task>
<task name = "GroundTransport">
      <slot type = "City" name = "City"/>
      <slot type = "Transport_Type" name = "TType"/>
</Task>
```

600

## FIG. 16

## FIG. 17A

P(ShowFlight) — ShowFlight

s

P(GroundTransport) — GroundTransport

f

## FIG. 17B

s → ShowFlightCmd

P(DCity|<s>)

Pr(ACity|<s>)

PreDCity — City — PostDCity — P(</s>|DCity) → f

P(DCity|ACity)

P(ACity | DCity)

PreACity — City — PostACity — P(</s>|ACity)

## FIG. 17C

s → ShowFlightCmd → PreDCity → City → PostDCity
Show Flights to    Boston   to

f ← PostACity ← City Seattle ← PreACity

FIG. 17C

FIG. 18A

FIG. 18B

FIG. 18C